(19)

**Europäisches Patentamt**
**European Patent Office**
**Office européen des brevets**

(11)  **EP 4 079 531 B1**

(12)  **EUROPEAN PATENT SPECIFICATION**

(45) Date of publication and mention
of the grant of the patent:
**01.01.2025  Bulletin 2025/01**

(21) Application number: **20901808.4**

(22) Date of filing: **16.06.2020**

(51) International Patent Classification (IPC):
**B60B 21/12** (2006.01)  **B60C 19/00** (2006.01)
**H02J 50/00** (2016.01)  **B60C 11/03** (2006.01)
**H02J 50/10** (2016.01)  **B60C 11/00** (2006.01)
**B60C 99/00** (2006.01)

(52) Cooperative Patent Classification (CPC):
**B60B 21/12; B60C 11/00; B60C 19/00;**
**B60C 99/00; H02J 50/005; H02J 50/10;**
B60C 2011/0033; B60C 2011/0355; Y02T 10/70;
Y02T 10/7072; Y02T 90/12; Y02T 90/14

(86) International application number:
**PCT/JP2020/023655**

(87) International publication number:
**WO 2021/124598 (24.06.2021 Gazette 2021/25)**

(54) **TIRE/WHEEL ASSEMBLY**

RAD-/REIFENANORDNUNG

ENSEMBLE PNEUMATIQUE/ROUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.12.2019  JP 2019229496**

(43) Date of publication of application:
**26.10.2022  Bulletin 2022/43**

(73) Proprietor: **BRIDGESTONE CORPORATION**
**Chuo-ku**
**Tokyo 104-8340 (JP)**

(72) Inventor: **KUWAYAMA Isao**
**Tokyo 104-8340 (JP)**

(74) Representative: **Marks & Clerk LLP**
**15 Fetter Lane**
**London EC4A 1BW (GB)**

(56) References cited:
**EP-A1- 4 043 233**           **WO-A1-2019/097927**
**DE-A1- 102013 109 355**   **JP-A- 2004 242 380**
**JP-A- 2009 018 716**        **JP-A- 2009 106 136**
**JP-A- 2010 041 824**        **JP-A- 2012 175 869**
**JP-A- 2016 020 110**        **JP-A- 2019 047 691**
**JP-A- 2019 047 691**        **JP-A- H08 126 106**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## EP 4 079 531 B1

**Description**

TECHNICAL FIELD

The present invention relates to a tire and wheel assembly.

BACKGROUND

In recent years, electric vehicles are actively developed as vehicles powered by electric energy (for example, JP 2018-068077 A (PTL 1)). Especially in autonomous driving technology which is being fully put to practical use, the responsiveness to vehicle operation is better when an electric motor is used than when an engine is used. Hence, the development of autonomous driving technology using electric vehicles is promoted. Reference may also be made to the disclosures in PTL 2, PTL 3 and PTL 4.

In particular, PTL 2 discloses a tire and wheel assembly comprising a tire including a tread portion; a wheel including a rim portion on which the tire is mounted; a power reception coil; and wherein one or more circumferential main grooves extend in a tire circumferential direction on a tread surface of the tread portion, and at least one circumferential main groove out of the one or more circumferential main grooves satisfies $OTD \geq SBG$ in a reference state in which the tire and wheel assembly is filled to a prescribed internal pressure and placed under no load, where OTD is a groove depth of the circumferential main groove, and SBG is a gauge from a groove bottom of the circumferential main groove to an outermost reinforcement member.

As power feeding methods of feeding power to power reception devices included in tire and wheel assemblies, wiring methods using wires and wireless methods such as an electromagnetic induction method and an electric field coupling method are proposed.

CITATION LIST

Patent Literature

PTL 1: JP 2018-068077 A
PTL 2: EP 4 043 233 A1 (under Article 54(3) EPC)
PTL 3: DE 10 2013 109355 A1
PTL 4: JP 2019 047691 A

SUMMARY

(Technical Problem)

The electromagnetic induction method is the following technique: Current is caused to flow through a power transmission coil (primary coil) installed on the road surface side to generate magnetic flux in, for example, a direction perpendicular to the road surface. As a result of this magnetic flux passing through a power reception coil (secondary coil) on the vehicle side, current flows through the power reception coil, thus supplying electric energy from the power transmission coil to the power reception coil. The electromagnetic induction method is particularly attracting attention because of its high power reception efficiency.

It could be helpful to provide a tire and wheel assembly that can achieve high power reception efficiency in automatic power feeding using the electromagnetic induction method.

(Solution to Problem)

This aim is achieved by:

(1) A tire and wheel assembly according to the present invention comprises: a tire including a tread portion and a reinforcement member composed of one or more reinforcement layers that are each a cord layer coated with rubber; a wheel including a rim portion on which the tire is mounted; and a power reception coil, wherein one or more circumferential main grooves extend in a tire circumferential direction on a tread surface of the tread portion, at least one circumferential main groove out of the one or more circumferential main grooves satisfies

a ratio OTD/SBG is 1.05 or more
wherein SBG is 0.5 mm or more and 4.5 mm or less,
in a reference state in which the tire and wheel assembly is filled to a prescribed internal pressure and placed under no load, where OTD is a groove depth of the circumferential main groove, and SBG is a gauge from a groove bottom of the circumferential main groove to an outermost reinforcement member in a tire radial direction, and in the reference state, a cord end of at least one reinforcement layer is located inward from a shoulder region in the tire width direction, the shoulder region being a region outward in the tire width direction from a position away from each of both tire widthwise ends of a maximum width reinforcement layer having the maximum width in the tire width direction out of the one or more reinforcement layers and inward in the tire width direction by 5 % of the width of the maximum width reinforcement layer in the tire width direction.

Herein, the "rim portion" in the "wheel" is an approved rim ("measuring rim" in ETRTO Standards Manual, "design rim" in TRA Year Book) in applicable size that is described or will be described in the future in an effective industrial standard in areas where tires are produced or used, such as JATMA (Japan Automobile Tyre Manufacturers Association) Year Book in Japan, ETRTO (European Tyre and Rim Technical Organisation) Standards 13754080-1 Manual in Europe, or TRA (Tire and Rim Association, Inc.) Year Book in the United States (The "rim portion" in the "wheel" thus includes not only current size but also a size that may be included in the industrial standard in the future. An example of the "size that will be described in the future" is the size described as "future developments" in ETRTO Standards Manual 2013). In the case of a size not described in the industrial standard, the "rim portion" denotes a rim whose width corresponds to the bead width of the tire.

The "prescribed internal pressure" denotes the air pressure (maximum air pressure) corresponding to the maximum load capability of a single wheel in applicable size and ply rating described in the standard such as JATMA. In the case of a size not described in the industrial standard, the "prescribed internal pressure" denotes the air pressure (maximum air pressure) corresponding to the maximum load capability defined for each vehicle on which the tire is mounted.

The below-described "maximum load" denotes the load corresponding to the maximum load capability.

The "tread surface" denotes the entire contact patch in the tire circumferential direction that comes into contact with the road surface when the tire and wheel assembly is filled to the prescribed internal pressure and placed under the maximum load.

The "circumferential main groove" denotes a groove that extends in the tire circumferential direction and whose groove width (opening width) when the tire and wheel assembly is filled to the prescribed internal pressure and placed under no load is 2 mm or more.

The "groove depth OTD of the circumferential main groove" denotes the maximum depth of the circumferential main groove measured in a direction normal to the contour line (virtual line in the case where there is a groove) defining the tread surface of the tread portion in the foregoing reference state.

The "gauge SBG from a groove bottom of the circumferential main groove to an outermost reinforcement member in a tire radial direction" denotes the distance from the groove bottom of the circumferential main groove to the outermost reinforcement member in the tire radial direction in an extension line of the line segment defining OTD in a state in which the tire and wheel assembly is filled to an internal pressure of 0 kPa and placed under no load. For example, the reinforcement member may be a belt, or a belt reinforcement layer located on the tire radial outer side of the belt.

(Advantageous Effect)

It is thus possible to provide a tire and wheel assembly that can achieve high power reception efficiency in automatic power feeding using the electromagnetic induction method.

BRIEF DESCRIPTION OF THE DRAWINGS

In the accompanying drawings:

FIG. 1 is a schematic view illustrating a wireless power reception system including a tire and wheel assembly according to one of the disclosed embodiments, in a cross section in the tire width direction;
FIG. 2 is a cross-sectional view of a tire in the tire width direction;
FIG. 3 is a cross-sectional view of a wheel in the width direction;
FIG. 4 is a schematic view illustrating a wireless power reception system including a tire and wheel assembly according to a modification of one of the disclosed embodiments, in a cross section in the tire width direction;
FIG. 5 is a cross-sectional view in the tire width direction for explaining each gauge of the tire and the depth of each circumferential main groove;

FIG. 6 is a plan view illustrating the structure of an inclined belt layer;

FIG. 7 is a cross-sectional view of a tire of one example in the tire width direction;

FIG. 8 is a cross-sectional view of a tire of another example in the tire width direction;

FIG. 9A is a perspective view for explaining the structure of a reinforcement member in the example in FIG. 8;

FIG. 9B is a perspective view for explaining the structure of a reinforcement member in the example in FIG. 8;

FIG. 10 is a cross-sectional view illustrating inclined belt layers and an interlayer rubber;

FIG. 11 is a cross-sectional view of a tire of one example in the tire width direction;

FIG. 12 is a cross-sectional view of a tire of one example in the tire width direction;

FIG. 13 is a schematic view illustrating an example of a carcass structure;

FIG. 14A is a cross-sectional view illustrating an example of an end of a carcass folded-up portion;

FIG. 14B is a cross-sectional view illustrating another example of an end of a carcass folded-up portion;

FIG. 14C is a cross-sectional view illustrating another example of an end of a carcass folded-up portion;

FIG. 15 is a cross-sectional view illustrating an example in which a side reinforcement rubber is provided;

FIG. 16 is a cross-sectional view illustrating another example in which a side reinforcement rubber is provided;

FIG. 17 is a cross-sectional view of a tire of one example in the tire width direction; and

FIG. 18 is a cross-sectional view of a tire of one example in the tire width direction.

## DETAILED DESCRIPTION

One of the disclosed embodiments will be described in detail below, with reference to the drawings. The dimensions, etc. in the following description are the dimensions, etc. in the foregoing reference state unless otherwise noted.

### <Wireless Power Reception System>

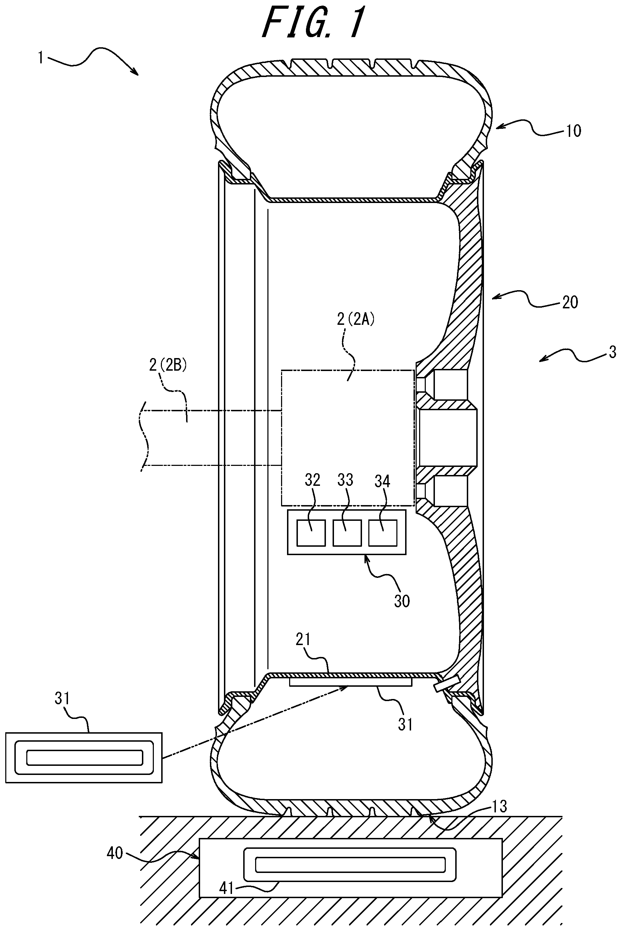

FIG. 1 is a schematic view illustrating a wireless power reception system including a tire and wheel assembly according to one of the disclosed embodiments, in a cross section in the tire width direction. A wireless power reception system 1 is a system configured to receive power transmitted wirelessly from an external power transmission device. Components outside the wireless power reception system will be described first. A power transmission device 40 includes a power transmission coil (primary coil) 41. The power transmission device 40 is, for example, installed on a road surface or buried near the road surface. The power transmission coil 41 generates an AC magnetic field based on alternating current supplied from a power source. The power transmission coil 41 is ring-shaped as a whole, and is located so that the axial direction of the ring will be approximately perpendicular to the road surface so as to generate the AC magnetic field upward from the road surface. In the drawing, the power transmission coil 41 is schematically illustrated. For example, the power transmission coil 41 included in the power transmission device 40 is wound around a core such as a ferrite core and is ring-shaped as a whole. The power transmission coil 41 is, however, not limited to such, and may be any coil capable of generating an AC magnetic field such as a coil spring or an air-core coil.

The wireless power reception system 1 includes a tire and wheel assembly 3 according to one of the disclosed embodiments, as illustrated in FIG. 1. A power reception device 30 that receives power supplied wirelessly is contained in a housing in the tire and wheel assembly 3 (the housing is a space inside the tire and wheel assembly 3). The tire and wheel assembly 3 will be described below.

### <<Tire and Wheel Assembly>>

The tire and wheel assembly 3 according to one of the disclosed embodiments includes a tire 10 including a tread portion 13 and a wheel 20 including a rim portion 21, as illustrated in FIG. 1. The tire 10 is mounted on the rim portion 21 in the wheel 20. Each of the tire 10 and the wheel 20 will be described below.

### (Tire)

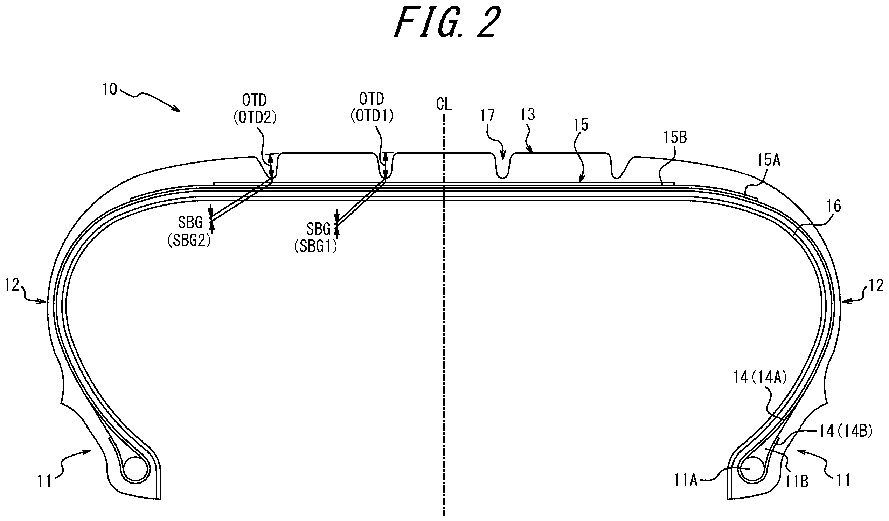

An example of the structure of the tire 10 will be described below. FIG. 2 is a cross-sectional view of the tire 10 in the tire width direction. As illustrated in FIG. 2, the tire 10 includes a pair of bead portions 11, a pair of sidewall portions 12 connected to the respective bead portions 11, and the tread portion 13 connected to the pair of sidewall portions 12.

Each bead portion 11 includes a bead core 11A and a bead filler 11B in this example. In this example, the bead core 11A includes a plurality of bead wires coated with rubber. In this example, the bead wires are made of steel cords. The bead filler 11B is made of rubber or the like, and is located on the tire radial outer side of the bead core 11A. In this example, the bead filler 11B has an approximately triangular cross-sectional shape that decreases in thickness outward in the tire radial direction. In the present invention, the bead core 11A and the bead filler 11B may be omitted from the tire 10.

In the present invention, the bead wires may be made of a non-magnetic material. As a result of the bead wires being made of a non-magnetic material, the bead wires can be prevented from interfering with the magnetic field that reaches a power reception coil 31 from the power transmission coil 41. Herein, the "non-magnetic material" denotes a material other than magnetic material. The "magnetic material" denotes a material exhibiting ferromagnetism (ferromagnet). Hence, the non-magnetic material includes a paramagnet and a diamagnet having low magnetic permeability. As the non-magnetic material, for example, a resin material including a thermoplastic resin such as polyester or nylon, a thermosetting resin such as vinyl ester resin or unsaturated polyester resin, and any other synthetic resin may be used. The resin material may further include fiber of glass, carbon, graphite, aramid, polyethylene, ceramic, or the like as reinforcement fiber. The non-magnetic material is not limited to resin, and any non-metal material such as rubber, glass, carbon, graphite, aramid, polyethylene, and ceramic may be used. As the non-magnetic material, a metal material including a paramagnet such as aluminum or a diamagnet such as copper may be used.

As illustrated in FIG. 2, the tire 10 includes a carcass 14 toroidally extending between the pair of bead portions 11. The ends of the carcass 14 are locked by the bead cores 11A. Specifically, the carcass 14 includes a carcass body portion 14A located between the bead cores 11A, and a carcass folded-up portion 14B folded back from inside to outside in the tire width direction around the bead core 11A. The extending length of the carcass folded-up portion 14B from inside to outside in the tire width direction may be set as appropriate. The carcass 14 may not include the carcass folded-up portion 14B, or may include the carcass folded-up portion 14B wound around the bead core 11A.

The carcass 14 may be composed of one or more carcass plies. For example, the carcass 14 may be composed of two carcass layers laminated in the tire radial direction in the tire equatorial plane CL. In this embodiment, the carcass cords forming each carcass layer of the carcass 14 are made of a non-magnetic material (organic fiber in this example). The carcass cords forming the carcass 14 may be made of steel cords.

The non-magnetic material includes a paramagnet and a diamagnet having low magnetic permeability. As the non-magnetic material, for example, a resin material including a thermoplastic resin such as polyester or nylon, a thermosetting resin such as vinyl ester resin or unsaturated polyester resin, and any other synthetic resin may be used. The resin material may further include fiber of glass, carbon, graphite, aramid, polyethylene, ceramic, or the like as reinforcement fiber. The non-magnetic material is not limited to resin, and any non-metal material such as rubber, glass, carbon, graphite, aramid, polyethylene, and ceramic may be used. As the non-magnetic material, a metal material including a paramagnet such as aluminum or a diamagnet such as copper may be used.

In the present invention, steel cords may be used as the carcass cords, but it is preferable to use carcass cords made of a non-magnetic material. In this way, the carcass 14 can be prevented from interfering with the magnetic field that reaches the power reception coil 31 from the power transmission coil 41, with it being possible to improve the power reception efficiency. Although the carcass 14 has a radial structure in this embodiment, the carcass 14 is not limited to such, and may have a bias structure.

A belt 15 and a tread rubber are provided on the tire radial outer side of the crown portion of the carcass 14. The belt 15 may be, for example, composed of one or more belt layers. In the illustrated example, a belt layer 15B is laminated on the tire radial outer side of a belt layer 15A. In this embodiment, the belt cords forming each belt layer of the belt 15 are made of a non-magnetic material (organic fiber in this example). The belt cords forming the belt 15 may be made of steel cords.

The non-magnetic material includes a paramagnet and a diamagnet having low magnetic permeability. As the non-magnetic material, for example, a resin material including a thermoplastic resin such as polyester or nylon, a thermosetting resin such as vinyl ester resin or unsaturated polyester resin, and any other synthetic resin may be used. The resin material may further include fiber of glass, carbon, graphite, aramid, polyethylene, ceramic, or the like as reinforcement fiber. The non-magnetic material is not limited to resin, and any non-metal material such as rubber, glass, carbon, graphite, aramid, polyethylene, and ceramic may be used. As the non-magnetic material, a metal material including a paramagnet such as aluminum or a diamagnet such as copper may be used.

In the present invention, steel cords may be used as the belt cords forming the belt 15, but it is preferable to use belt cords made of a non-magnetic material. In this way, the belt 15 can be prevented from interfering with the magnetic field that reaches the power reception coil 31 from the power transmission coil 41, with it being possible to improve the power reception efficiency. In the present invention, the number of belt layers, the inclination angle of the belt cords, the width of each belt layer in the tire width direction, and the like are not limited, and may be set as appropriate.

As illustrated in FIG. 2, the tire 10 includes an inner liner 16. The inner liner 16 is located to cover the inner surface of the tire 10. The inner liner 16 may be composed of one or more inner liner layers laminated in the tire radial direction in the tire equatorial plane CL. The inner liner 16 is, for example, made of a butyl-based rubber having low air permeability. Examples of the butyl-based rubber include butyl rubber and halogenated butyl rubber as a derivative thereof. The inner liner 16 is not limited to a butyl-based rubber, and may be made of any other rubber composition, resin, or elastomer.

In the present invention, each sidewall portion 12 may include a side reinforcement rubber. The side reinforcement rubber may have, for example, a crescent cross-sectional shape. Thus, when the tire punctures, the side reinforcement rubber can take over the load to enable running.

The tire is preferably a passenger vehicle tire, and more preferably a passenger vehicle radial tire.

Preferably, the ratio SW/OD between the section width SW and the outer diameter OD of the tire 10 is 0.26 or less in the case where the section width SW of the tire 10 is less than 165 (mm), and the section width SW (mm) and the outer diameter OD (mm) of the tire 10 satisfy

$$OD \text{ (mm)} \geq 2.135 \times SW \text{ (mm)} + 282.3 \text{ (mm)} \text{ (hereafter referred to as "relational formula (1)")}$$

in the case where the section width SW of the tire 10 is 165 (mm) or more.

As a result of the foregoing ratio SW/OD or relational formula (1) being satisfied, the section width SW of the tire 10 is small relative to the outer diameter OD of the tire 10, so that the air resistance can be reduced. Moreover, the narrow section width makes it possible to secure a vehicle space. In particular, a drive component installation space can be secured near the vehicle-installed inside of the tire.

As a result of the foregoing ratio SW/OD or relational formula (1) being satisfied, the outer diameter OD of the tire 10 is large relative to the section width SW of the tire 10, so that the rolling resistance can be reduced. Moreover, a larger diameter of the tire 10 contributes to a higher wheel axle and a larger underfloor space, so that a space for a vehicle trunk, etc. and a drive component installation space can be secured.

Thus, as a result of the foregoing ratio SW/OD or relational formula (1) being satisfied, high fuel efficiency can be achieved for fed electric energy, and a large vehicle space can be secured.

Preferably, the section width SW (mm) and the outer diameter OD (mm) of the tire 10 satisfy

$$OD \text{ (mm)} \geq -0.0187 \times SW \text{ (mm)}^2 + 9.15 \times SW \text{ (mm)} - 380 \text{ (mm)}$$ (hereafter referred to as "relational formula (2)").

As a result of the foregoing relational formula (2) being satisfied, the section width SW of the tire 10 is small relative to the outer diameter OD of the tire 10, so that the air resistance can be reduced. Moreover, the narrow section width makes it possible to secure a vehicle space. In particular, a drive component installation space can be secured near the vehicle-installed inside of the tire 10.

As a result of the foregoing relational formula (2) being satisfied, the outer diameter OD of the tire 10 is large relative to the section width SW of the tire 10, so that the rolling resistance can be reduced. Moreover, a larger diameter of the tire 10 contributes to a higher wheel axle and a larger underfloor space, so that a space for a vehicle trunk, etc. and a drive component installation space can be secured.

Thus, as a result of the foregoing relational formula (2) being satisfied, high fuel efficiency can be achieved for fed electric energy, and a large vehicle space can be secured.

In each example described above, the tire 10 preferably satisfies the foregoing ratio SW/OD and/or relational formula (2), or preferably satisfies the foregoing relational formula (1) and/or relational formula (2).

In the tire 10, the tire widthwise cross-sectional area S1 of the bead filler 11B is preferably 1 time or more and 8 times or less the tire widthwise cross-sectional area S2 of the bead core 11A. Thus, the power feeding efficiency and the fuel efficiency can be favorably balanced.

In the case where the tire 10 has a sandwiching bead core structure of sandwiching the carcass from the tire widthwise inner side and the tire widthwise outer side, S2 is the total volume of the bead cores on the widthwise inner side and the widthwise outer side of the carcass.

As a result of the cross-sectional area S1 of the bead filler 11B being in the foregoing range, the volume of the bead filler which is a high-rigidity member can be reduced to reduce the vertical spring coefficient of the tire, so that the ride comfort can be improved. Moreover, the bead filler can be reduced in weight to reduce the weight of the tire, and consequently the rolling resistance of the tire can be further reduced.

Particularly in a narrow-width, large-diameter tire satisfying the foregoing relational formula (1) or relational formula (2), the tension rigidity of the belt is high and the tension rigidity of the tire side portion is low in comparison with the belt. Accordingly, the vertical spring coefficient reduction effect by limiting the cross-sectional area S1 of the bead filler to the predetermined range as mentioned above is very high.

As a result of the tire widthwise cross-sectional area S1 of the bead filler 11B being 8 times or less the tire widthwise cross-sectional area S2 of the bead core 11A, the volume of the bead filler which is a high-rigidity member can be prevented from being excessively high, and the vertical spring coefficient of the tire can be prevented from being excessively high. A decrease in ride comfort can thus be suppressed.

As a result of the tire widthwise cross-sectional area S1 of the bead filler 11B being 1 time or more the tire widthwise cross-sectional area S2 of the bead core 11A, the rigidity of the bead portion can be ensured, and an excessive decrease in the horizontal spring coefficient can be suppressed to thus ensure the steering stability.

The tire 10 preferably satisfies

$$0.1 \leq BFW/BDW \leq 0.6$$

where BFW is the width of the bead filler 11B in the tire width direction at the tire radial center position, and BDW is the maximum width of the bead core 11A in the tire width direction.

Thus, the power feeding efficiency and the fuel efficiency can be favorably balanced.

As a result of the ratio BFW/BDW being 0.6 or less, the volume of the bead filler is decreased while maintaining the height of the bead filler. Hence, while ensuring the rigidity in the tire rotation direction, the vertical spring coefficient can be reduced to improve the ride comfort. Moreover, the tire can be reduced in weight.

As a result of the ratio BFW/BDW being 0.1 or more, the rigidity of the bead portion can be ensured, and the horizontal spring coefficient can be maintained to further ensure the steering stability.

The tire 10 preferably satisfies

$$0.1 \leq BFH/SH \leq 0.5$$

where BFH is the height of the bead filler 11B in the tire radial direction, and SH is the section height of the tire (tire section height).

Thus, the power feeding efficiency and the fuel efficiency can be favorably balanced.

As a result of the ratio BFH/SH being 0.5 or less, the radial height of the bead filler which is a high-rigidity member is decreased to effectively reduce the vertical spring coefficient of the tire, and therefore the ride comfort can be improved.

As a result of the ratio BFH/SH being 0.1 or more, the rigidity of the bead portion can be ensured, and the horizontal spring coefficient can be maintained to further ensure the steering stability.

Herein, the tire section height SH is 1/2 of the difference between the outer diameter of the tire and the rim diameter in a non-load state when the tire is attached to the rim and filled to internal pressure prescribed for each vehicle on which the tire is mounted.

The height BFH of the bead filler 11B in the tire radial direction is preferably 45 mm or less. Thus, the power feeding efficiency and the fuel efficiency can be favorably balanced.

In each example described above, the ratio Ts/Tb between the gauge Ts of the sidewall portion 12 at the tire maximum width position (measured in a direction normal to the tangent at a point on the tire surface at the tire maximum width position, in this cross section) and the bead width Tb of the bead core 11A at the tire radial center position (the width of the bead portion 11 in the tire width direction) in the tire 10 is preferably 15 % or more and 60 % or less. Thus, the power feeding efficiency and the fuel efficiency can be favorably balanced.

Herein, "tire maximum width position" is the maximum width position in a cross section in the tire width direction in the reference state.

The gauge Ts is the total thickness of all members such as the rubber, the reinforcement member, and the inner liner.

As a result of the ratio Ts/Tb being in the foregoing range, the rigidity at the tire maximum width position where the bending deformation is large during tire loading is moderately decreased, and the vertical spring coefficient can be reduced to thus improve the ride comfort.

In detail, if the ratio Ts/Tb is more than 60 %, there is a possibility that the gauge of the sidewall portion 12 at the tire maximum width position is large and the rigidity of the sidewall portion 12 is high, and accordingly the vertical spring coefficient is high. If the ratio Ts/Tb is less than 15 %, there is a possibility that the horizontal spring coefficient decreases excessively and the steering stability cannot be ensured.

In each example described above, the gauge Ts of the sidewall portion 12 at the tire maximum width position in the tire 10 is preferably 1.5 mm or more. Thus, the power feeding efficiency and the fuel efficiency can be favorably balanced.

As a result of the gauge Ts being 1.5 mm or more, moderate rigidity at the tire maximum width position is maintained and a decrease in the horizontal spring coefficient is suppressed, so that the steering stability can be further ensured.

In each example described above, the diameter Tbc of the bead core 11A (the maximum width of the bead core in the tire width direction) in the tire 10 is preferably 3 mm or more and 16 mm or less. Thus, the power feeding efficiency and the fuel efficiency can be favorably balanced.

As a result of Tbc being 3 mm or more, weight reduction can be achieved while ensuring the bending rigidity and the torsional rigidity on the rim flange. As a result of Tbc being 16 mm or less, the steering stability can be ensured while suppressing an increase in weight.

In the case where the bead core is divided into a plurality of small bead cores by the carcass, Tbc is the distance between the innermost edge and the outermost edge of all small bead cores in the width direction.

In each example described above, the footprint area of the tire 10 when the tire 10 is placed under the maximum load prescribed for each vehicle on which the tire is mounted is preferably 8000 mm$^2$ or more. Thus, a reduction in the rolling resistance of the tire and a reduction in the tire weight can both be achieved, and the power feeding efficiency and the fuel efficiency can be favorably balanced. In addition, the tire axial force can be secured to enhance the stability and safety of the vehicle.

In each example described above, the Young's modulus of the belt cords in the tire 10 is preferably 40000 MPa or more. Thus, an appropriate carcass structure and belt rigidity can be achieved, and the strength of the tire usable even at high internal pressure can be ensured. Moreover, the power feeding efficiency and the fuel efficiency can be favorably balanced.

In each example described above, the thickness of the inner liner 16 in the tire 10 is preferably 0.6 mm or more. Thus, air leakage in a high internal pressure state can be prevented. Moreover, the power feeding efficiency and the fuel efficiency can be favorably balanced.

In each example described above, the ratio Ts/Tc between the gauge Ts of the sidewall portion 12 at the tire maximum width position and the diameter Tc of the carcass cord in the tire 10 is preferably 4 or more and 12 or less. Thus, the power feeding efficiency and the fuel efficiency can be favorably balanced.

As a result of the ratio Ts/Tc being in this range, the rigidity at the tire maximum width position where the bending deformation during tire loading is large is decreased moderately to reduce the vertical spring coefficient, so that the ride comfort can be improved.

In detail, as a result of the ratio Ts/Tc being 12 or less, an excessive increase in the gauge of the sidewall portion 4 at the tire maximum width position can be suppressed. Hence, an increase in the vertical spring coefficient caused by an increase in the rigidity in this part can be suppressed. As a result of the ratio Ts/Tc being 4 or more, an excessive decrease in the horizontal spring coefficient can be suppressed to thus ensure the steering stability.

In each example described above, the ratio Ta/Tc between the distance Ta from the surface of the carcass cord to the tire outer surface at the tire maximum width position and the diameter Tc of the carcass cord in the tire 10 is preferably 2 or more and 8 or less. Thus, the power feeding efficiency and the fuel efficiency can be favorably balanced.

As a result of the ratio Ta/Tc being 8 or less, the gauge of the sidewall portion 12 at the tire maximum width position can be decreased, and the rigidity of the sidewall portion 12 can be decreased to reduce the vertical spring coefficient, so that the ride comfort can be further improved. As a result of the ratio Ta/Tc being 2 or more, the horizontal spring coefficient can be ensured, and the steering stability can be further ensured.

Herein, Ta is the distance in the tire width direction from the surface of the outermost carcass cord in the width direction to the tire outer surface at the tire maximum width position.

In detail, in the case where the carcass folded-up portion 14B extends outward from the tire maximum width position in the radial direction, Ta is the distance in the tire width direction from the surface of a carcass cord 14c of the part forming the carcass folded-up portion 14B to the tire outer surface.

In each example described above, the diameter Tc of the carcass cord 14c in the tire 10 is preferably 0.2 mm or more and 1.2 mm or less. Thus, the power feeding efficiency and the fuel efficiency can be favorably balanced.

As a result of Tc being 0.8 mm or less, the vertical spring coefficient can be reduced to improve the ride comfort. As a result of Tc being 0.4 mm or more, the horizontal spring coefficient can be increased to ensure the steering stability.

The internal pressure of the tire and wheel assembly is preferably 120 kPa to 200 kPa. As a result of the internal pressure being 200 kPa or less, the footprint area increases. If the footprint area is small, a space forms between the tire and the road surface, and water, foreign matter, and the like enter the space and interfere with the magnetic flux, which causes a decrease in power reception efficiency. If the footprint area is large, no space forms between the tire and the road surface, and the magnetic flux is prevented from being interfered by water, foreign matter, and the like. Hence, the power reception efficiency can be improved. As a result of the internal pressure being 200 kPa or less, the sidewall portion of the tire deflects easily, and the distance between the power reception coil and the power transmission coil can be reduced. This also contributes to improved power reception efficiency. In the tire and wheel assembly according to this embodiment, the internal pressure is 120 kPa or more. Hence, the rolling resistance can be reduced to improve the fuel efficiency.

The internal pressure is more preferably 140 kPa to 180 kPa. Thus, the power reception efficiency can be further improved while further improving the fuel efficiency.

The internal pressure is further preferably 150 kPa to 170 kPa. Thus, the power reception efficiency can be further improved while further improving the fuel efficiency.

Preferably, the foregoing relational formula (1) and/or (2) of SW and OD is satisfied when the tire is filled to the foregoing internal pressure.

The internal pressure of the tire and wheel assembly is also preferably more than 200 kPa and 400 kPa or less. As a result of the internal pressure being more than 200 kPa, the rolling resistance can be reduced to improve the fuel efficiency. As a result of the internal pressure being 400 kPa or less, the footprint area increases. If the footprint area is small, a space forms between the tire and the road surface, and water, foreign matter, and the like enter the space and interfere with the magnetic flux, which causes a decrease in power reception efficiency. If the footprint area is large, no space forms between the tire and the road surface, and the magnetic flux is prevented from being interfered by water, foreign matter, and the like. Hence, the power reception efficiency can be improved. As a result of the internal pressure being 400 kPa or less, the sidewall portion of the tire deflects easily, and the distance between the power reception coil and the power transmission coil can be reduced. This also contributes to improved power reception efficiency.

The internal pressure is more preferably 260 kPa to 350 kPa. Thus, the fuel efficiency can be further improved while further improving the power reception efficiency. The internal pressure is further preferably 300 kPa to 320 kPa. Thus, the fuel efficiency can be further improved while further improving the power reception efficiency.

Preferably, the foregoing relational formula (1) and/or (2) of SW and OD is satisfied when the tire is filled to the foregoing internal pressure.

(Wheel)

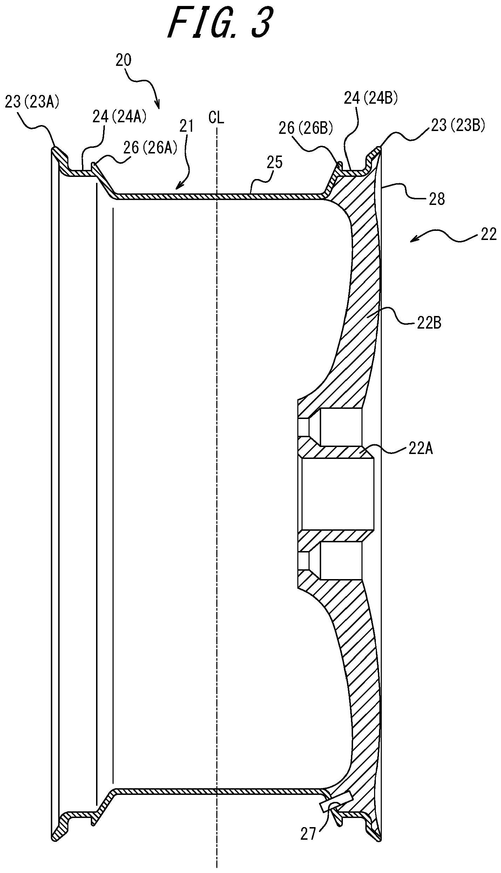

The structure of the wheel 20 will be described below. FIG. 3 is a cross-sectional view of the wheel 20 according to one of the disclosed embodiments in the width direction.

The wheel 20 includes the rim portion 21 that is cylindrical, and a disc portion 22 located on the radial inner side of the rim portion 21 and configured to be fixed to and supported by a hub 2A of a vehicle 2, as illustrated in FIG. 3.

The rim portion 21 includes a pair of flanges 23 (an inner flange 23A and an outer flange 23B), a pair of bead seats 24 (an inner bead seat 24A and an outer bead seat 24B), and a well 25, from the wheel widthwise outer side. The bead portions 11 of the tire 10 are attached to the respective bead seats 24. The flanges 23 each extend outward from the corresponding bead seat 24 in the wheel radial direction and the wheel width direction, in order to support the corresponding bead portion 11 of the tire 10 laterally. The well 25 is recessed inward in the wheel radial direction between the pair of bead seats 24, to ease mounting and removal of the tire. The well 25 includes a bottom portion and an inclined surface connecting the bottom portion and the bead seat 24. The respective bead seats 24 are provided with a pair of humps 26 (an inner hump 26A and an outer hump 26B), on the wheel widthwise inner side. Each hump 26 protrudes outward in the wheel radial direction, to prevent the bead of the tire from falling into the well 25.

The rim portion 21 may be made of, for example, a non-magnetic material.

The non-magnetic material includes a paramagnet and a diamagnet having low magnetic permeability. As the non-magnetic material, for example, a resin material including a thermoplastic resin such as polyester or nylon, a thermosetting resin such as vinyl ester resin or unsaturated polyester resin, and any other synthetic resin may be used. The resin material may further include fiber of glass, carbon, graphite, aramid, polyethylene, ceramic, or the like as reinforcement fiber. The non-magnetic material is not limited to resin, and any non-metal material such as rubber, glass, carbon, graphite, aramid, polyethylene, and ceramic may be used. As the non-magnetic material, a metal material including a paramagnet such as aluminum or a diamagnet such as copper may be used. In this way, the rim portion 21 can be prevented from interfering with the magnetic field that reaches the power reception coil 31 from the power transmission coil 41, with it being possible to improve the power reception efficiency.

The rim portion 21 in the wheel 20 is also provided with a valve 27 for filling the inner cavity of the tire 10 with gas such as air when the tire 10 is mounted. The valve 27 may be made of, for example, the foregoing resin material. As a result of the valve 27 being made of the foregoing non-magnetic material, the valve 27 can be prevented from interfering with the magnetic field that reaches the power reception coil 31 from the power transmission coil 41.

The disc portion 22 includes a ring-shaped attachment portion 22A forming the radial inner edges of the disc portion 22, and a plurality of spokes 22B extending outward from the attachment portion 22A in the wheel radial direction. The attachment portion 22A is a part that is joined and fixed to the hub 2A of the vehicle 2 (see FIG. 1 and FIG. 3), and has an attachment through hole in the wheel width direction to insert a bolt or the like for fixing the hub 2A and the attachment portion 22A. The wheel radial outer end of each spoke 22B is connected integrally to the end of the wheel radial inner surface of the rim portion 21.

The disc portion 22 may contain, for example, a magnetic material having high magnetic permeability (for example, ferromagnet) such as metal or ferrite. Hence, the magnetic field that reaches the power reception coil 31 from the power transmission coil 41 can be prevented from being attenuated due to metal and other magnetic fields present outside of the tire and wheel assembly 3, so that the power reception efficiency can be improved. For example, in the case where the disc portion 22 is made of a resin material, the wheel 20 can be reduced in weight.

The disc portion 22 in the wheel 20 further includes a wheel cover 28 that covers the wheel widthwise outer side of the spokes 22B. The wheel cover 28 may contain, for example, a magnetic material having high magnetic permeability (for example, ferromagnet) such as metal or ferrite. Hence, the magnetic field that reaches the power reception coil 31 from the power transmission coil 41 can be prevented from being attenuated due to metal and other magnetic fields present outside of the tire and wheel assembly 3, so that the power reception efficiency can be improved.

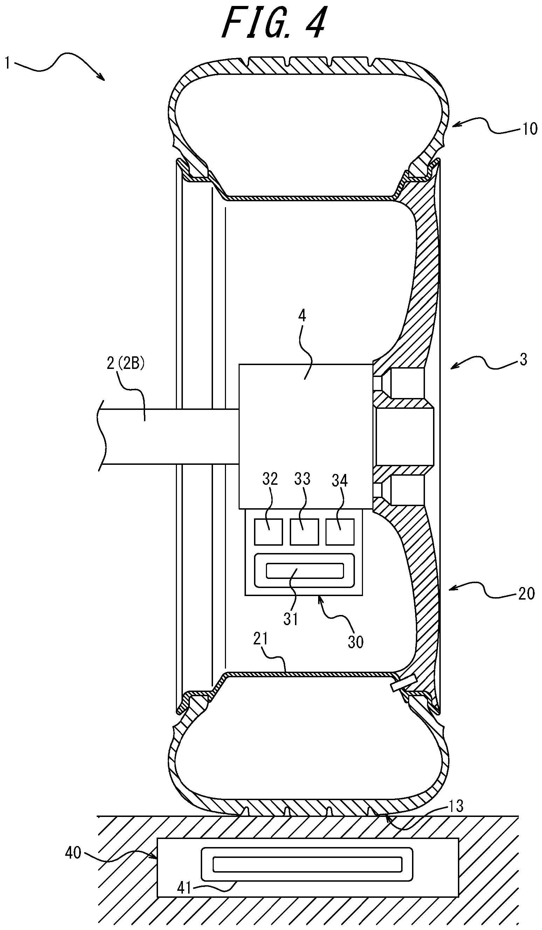

The wheel 20 includes a housing for containing the power reception device 30 (see FIG. 1 and FIG. 4) that receives power supplied wirelessly from outside the tire 10 in the tire radial direction, on the tire radial inner side of the rim portion 21, i.e. in the space surrounded by the rim portion 21 and the disc portion 22. For example, in the case where the power reception device 30 is attached to the hub 2A of the vehicle 2, as a result of the wheel 20 being attached to the hub 2A of the vehicle 2, the power reception device 30 is contained in the housing in the wheel 20.

<Power Reception Coil>

Referring back to FIG. 1, the power reception device 30 is, for example, attached to the hub 2A of the vehicle 2. The presently disclosed techniques are, however, not limited to such, and the power reception device 30 may be attached to any position such as a drive shaft 2B so that the power reception device 30 will be contained on the tire radial inner side of the rim portion 21 in the wheel 20 in a state in which the wheel 20 is attached to the hub 2A of the vehicle 2. In this example, the power reception device 30 is configured to not rotate with the rotation of the tire 10 or the wheel 20.

In this embodiment, the power reception coil (secondary coil) 31 is attached to the outer circumferential surface of the bottom portion of the well 25. In detail, four power reception coils 31 are arranged at equal intervals (interval d (mm)) circumferentially. Hence, in this example, the power reception coil 31 is configured to rotate with the rotation of the tire 10 or the wheel 20. Here, the circumferential position of the power reception coil 31 changes with the rotation of the tire 10 or the wheel 20. The power reception coil 31 is located so as to face the power transmission coil 41 at least at a certain tire rotation angle in a state in which the tire and wheel assembly 3 is located above the power transmission device 40. Therefore, when the tire 10 is located on the road surface above the power transmission coil 41 and the power transmission coil 41 and the power reception coil 31 face each other, the power reception coil 31 generates an electromotive force based on an AC magnetic field generated by the power transmission coil 41, as a result of which current flows to feed power. The power reception coil 31 is ring-shaped as a whole, and is located so that the axial direction of the ring will be approximately perpendicular to the road surface. For example, the power reception coil 31 is wound around a core such as a ferrite core and is ring-shaped as a whole. The power reception coil 31 is, however, not limited to such, and may be any coil capable of generating an electromotive force based on an AC magnetic field, such as a coil spring or an air-core coil.

The position of the power reception coil 31 is not limited as long as the power reception coil 31 faces the power transmission coil 41 when the tire 10 is located on the road surface above the power transmission coil 41. For example, the power reception coil 31 may be attached to the inner circumferential surface of the bottom portion of the well 25, or attached to the inner circumferential surface or outer circumferential surface of another part of the rim portion 21. In such a case, too, the power reception coil 31 rotates with the rotation of the tire 10 or the wheel 20. The power reception coil 31 may be attached to the inside of the tire and wheel assembly 3. In this case, the power reception coil 31 may be configured to not rotate with the rotation of the tire 10 or the wheel 20. For example, a core fixed to the wheel 20 and protruding into tire inner cavity may be provided, and the power reception coil 31 may be attached to the core. In this case, the power reception coil 31 may be configured to rotate with the rotation of the tire 10 or the wheel 20.

The number of power reception coils 31 is not limited. For example, in the case of using one circumferentially continuous power reception coil 31, continuous power feeding is possible during tire rolling when the tire 10 is located on the road surface above the power transmission coil 41. In the case of dividing the power reception coil 31 into a plurality of power reception coils 31, the total size of the power reception coils 31 can be reduced to suppress a weight increase due to the power reception coils 31, so that the fuel efficiency can be improved. In this embodiment, four power reception devices 30 are provided in correspondence with the four power reception coils 31. However, the number of power reception devices 30 may be any number corresponding to, for example, the number of power reception coils 31, and the number of power reception devices 30 may be different from the number of power reception coils 31.

In this example, the power reception device 30 includes a power conversion circuit 32, a power storage 33, and a controller 34. The power conversion circuit 32 converts power generated in the power reception coil 31 into DC power, and supplies the DC power to the power storage 33 or another in-vehicle device included in the vehicle 2 via a conductive wire or the like. The power storage 33 stores the power generated in the power reception coil 31. The power storage 33 is, for example, a capacitor, but is not limited to such, and may be any power storage device such as a storage battery. In the case where the power storage 33 is a capacitor, the power storage 33 can be charged and discharged in a shorter time than a storage battery. The power storage 33 that is a capacitor is therefore advantageous in such a situation that requires high readiness such as storing the power generated in the power reception coil 31 when the vehicle 2 runs on the power transmission device 40 provided on the road. The controller 34 may include one or more processors that provide processes for controlling each function of the power reception device 30. The controller 34 may be a general-purpose processor such as a central processing unit (CPU) that executes a program defining a control procedure, or a dedicated processor that specializes in processes of each function. The controller 34 may include storage means for storing a program and the like, and any means used for controlling the power reception device 30 such as communication means for communicating with an external electronic device wiredly or wirelessly.

In the case where the power reception coil 31 is configured to rotate with the rotation of the tire 10 or the wheel 20 as in this embodiment, the power generated in the power reception coil 31 may be, for example, transmitted to the power conversion circuit 32 via a slip ring. Alternatively, the power generated in the power reception coil 31 may be transmitted to a first repeating coil (wiredly). In such a case, a magnetic field generated by current flowing through the first repeating coil passes through a second repeating coil to cause current to flow through the second repeating coil, as a result of which power can be transmitted from the second repeating coil to the power conversion circuit 32 and the like. In this case, the first repeating coil and the second repeating coil are also configured to rotate with the rotation of the tire 10 or the wheel 20. The repeating coils may be, for example, attached to the outer circumferential surface of the well 25.

In the case where the power reception coil 31 is configured to not rotate with the rotation of the tire 10 or the wheel 20 (for example, in the case where the power reception coil 31 is attached to the hub 2A), power can be transmitted from the power reception coil 31 directly to the power storage 33 and the like. In this case, it is preferable that the carcass 14 is made of the foregoing non-magnetic material, the belt cord is made of the foregoing non-magnetic material, and the rim portion 21 in the wheel 20 is made of the foregoing non-magnetic material, from the viewpoint of suppressing a decrease in power reception efficiency.

FIG. 4 is a schematic view illustrating a wireless power reception system including a tire and wheel assembly according to a modification of one of the disclosed embodiments, in a cross section in the tire width direction.

In the example illustrated in FIG. 4, a tire and wheel assembly 1 includes an in-wheel motor 4. A power reception device 30 is attached to the in-wheel motor 4.

As illustrated in FIG. 4, the power reception device 30 may be attached so as to not rotate when the tire 10 or the wheel 20 rotates. In the illustrated example, the power reception device 30 is attached to a cover of the hub 2A.

In such a case, only one power reception device 30 (power reception coil 31) can be located at a position facing the road surface. On the other hand, in the case where the power reception device 30 is attached at such a position where the power reception device 30 rotates with the rotation of the tire 10 and the wheel 20 as illustrated in FIG. 1, it is preferable to arrange one or more power reception devices 30 (power reception coils 31) continuously or intermittently in the circumferential direction of the wheel 20.

Returning to the description of the tire, in this embodiment, the tire 10 includes one or more (four in the illustrated example) circumferential main grooves 17 extending in the tire circumferential direction on the tread surface of the tread portion 13, as illustrated in FIG. 2. At least one circumferential main groove satisfies

the ratio OTD/SBG is 1.05 or more

in the foregoing reference state, where OTD is the groove depth of the circumferential main groove 17, and SBG is the gauge from the groove bottom of the circumferential main groove 17 to the outermost reinforcement member in the tire radial direction (the belt layer 15B on the tire radial outer side out of the two belt layers in the illustrated example).

The functions and effects of the tire and wheel assembly according to this embodiment will be described below.

In the tire and wheel assembly according to this embodiment, at least one circumferential main groove 17 satisfies the ratio OTD/SBG is 1.05 or more. Accordingly, of the magnetic flux generated from the power transmission coil 41, the magnetic flux passing the position of the circumferential main groove 17 to reach the power reception coil 31 is less likely to be interfered by the tread rubber than in the case where the ratio OTD/SBG is less than 1.05, and more magnetic flux can reach the power reception coil 31.

The tire and wheel assembly according to this embodiment can therefore achieve high power reception efficiency in automatic power feeding using the electromagnetic induction method.

The ratio OTD/SBG is 1.05 or more. Thus, higher power reception efficiency can be achieved in automatic power feeding using the electromagnetic induction method. For the same reason, the ratio OTD/SBG is preferably 1.3 or more. The ratio OTD/SBG is preferably 1.5 or less, from the viewpoint of ensuring the wear resistance.

In the case where two or more circumferential main grooves satisfy the ratio OTD/SBG is 1.05 or more, the ratio OTD/SBG may be the same or different depending on the position of the circumferential main groove.

In the case where there is a circumferential main groove of the ratio OTD/SBG is less than 1.05, the ratio OTD/SBG of the circumferential main groove is preferably 0.8 or more, from the viewpoint of ensuring the drainage performance.

The at least one circumferential main groove (the ratio OTD/SBG is 1.05 or more) is preferably located in a region where the surface of the power reception coil is projected in a direction orthogonal to the surface. Thus, higher power reception efficiency can be achieved in automatic power feeding using the electromagnetic induction method. The at least one circumferential main groove may be, for example, at least one circumferential main groove located on the tire equatorial plane CL or at least one circumferential main groove nearest the tire equatorial plane CL, corresponding to the projected region. Alternatively, the at least one circumferential main groove may be, for example, at least one circumferential main groove located outermost in the tire width direction.

Preferably, all circumferential main grooves located in the region where the surface of the power reception coil is projected in the direction orthogonal to the surface satisfy the ratio OTD/SBG is 1.05 or more, from the viewpoint of further improving the power reception efficiency.

OTD is preferably 2 mm or more and 10 mm or less. As a result of OTD being 2 mm or more, higher power reception efficiency can be achieved in automatic power feeding using the electromagnetic induction method. As a result of OTD being 10 mm or less, the steering stability can be ensured. For the same reason, OTD is more preferably 3 mm or more and 8 mm or less. SBG is 0.5 mm or more and 4.5 mm or less. With the same tread thickness, the anti-cut resistance can be ensured if SBG is 0.5 mm or more, and higher power reception efficiency can be achieved in automatic power feeding using the electromagnetic induction method if SBG is 4.5 mm or less. For the same reason, SBG is preferably 1.0 mm to 3.5 mm.

The circumferential main groove most preferably extends straight in the tire circumferential direction. The circumferential main groove may extend in the tire circumferential direction in a zigzag or curved form. In this case, the circumferential main groove preferably has a groove part continuously extending straight in the tire circumferential direction (see-through part (i.e. a part in which the kicking-out side can be seen without being obstructed by the groove wall when seeing the kicking-out side from the stepping-in side during ground contact)), to improve the power reception efficiency.

The groove width (opening width) of the circumferential main groove is preferably 2 % or more of the tread width TW. Thus, the drainage performance can be improved. For the same reason, the groove width of the circumferential main groove is more preferably 4 % or more of the tread width TW. The groove width of the circumferential main groove is preferably 20 % or less of the tread width TW, from the viewpoint of ensuring the rigidity of the land portion and improving the wear resistance. For the same reason, the groove width of the circumferential main groove is more preferably 15 % or less of the tread width TW.

Herein, "tread width" denotes the distance between tread edges in the tire width direction when the tire and wheel assembly is filled to the prescribed internal pressure and placed under no load.

The groove width (opening width) of the circumferential main groove is preferably 3 mm or more, without being limited thereto. Thus, the power reception efficiency can be further improved. For the same reason, the groove width of the circumferential main groove is more preferably 5 mm or more, without being limited thereto. The groove width of the circumferential main groove is preferably 30 mm or less without being limited thereto, from the viewpoint of ensuring the rigidity of the land portion and improving the wear resistance. For the same reason, the groove width of the circumferential main groove 17 is more preferably 20 mm or less.

The tread surface of the tread portion 13 may have no widthwise groove extending in the tire width direction, or have one or more widthwise grooves. The tread surface of the tread portion 13 may have no circumferential sipe extending in the tire circumferential direction or no widthwise sipe extending in the tire width direction, or have one or more circumferential sipes and/or one or more widthwise sipes. Herein, "widthwise groove" is a groove that extends in the tire width direction and whose groove width (opening width) when the tire and wheel assembly is filled to the prescribed internal pressure and placed under no load is 2 mm or more. Herein, "circumferential sipe" is a groove that extends in the tire circumferential direction and whose groove width (opening width) when the tire and wheel assembly is filled to the prescribed internal pressure and placed under no load is less than 2 mm. Herein, "widthwise sipe" is a sipe whose groove width (opening width) when the tire and wheel assembly is filled to the prescribed internal pressure and placed under no load is less than 2 mm.

The groove width (opening width) of the widthwise groove may be, for example, 1 mm to 15 mm without being limited thereto, to achieve both the drainage performance and the cornering performance. For the same reason, the groove width of the widthwise groove is more preferably 2 mm to 10 mm.

The groove depth (maximum depth) of the widthwise groove may be, for example, 2 mm to 10 mm without being limited thereto, to achieve both the antiwear performance and the steering stability. For the same reason, the groove depth of the widthwise groove is more preferably 3 mm to 8 mm.

A groove continuous from one side to the other side of the tread surface of the tire in the tire circumferential direction is regarded as a circumferential groove (including a circumferential main groove), and any other groove is regarded as a widthwise groove.

The negative ratio of the whole tread surface of the tread portion 13 may be 8 % to 40 %, without being limited thereto. As a result of the negative ratio of the whole tread surface of the tread portion 13 being 8 % or more, the drainage performance can be further enhanced. As a result of the negative ratio of the whole tread surface of the tread portion 13 being 40 % or less, the wear resistance can be further enhanced. For the same reason, the negative ratio of the whole tread surface of the tread portion 13 is more preferably 15 % to 35 %.

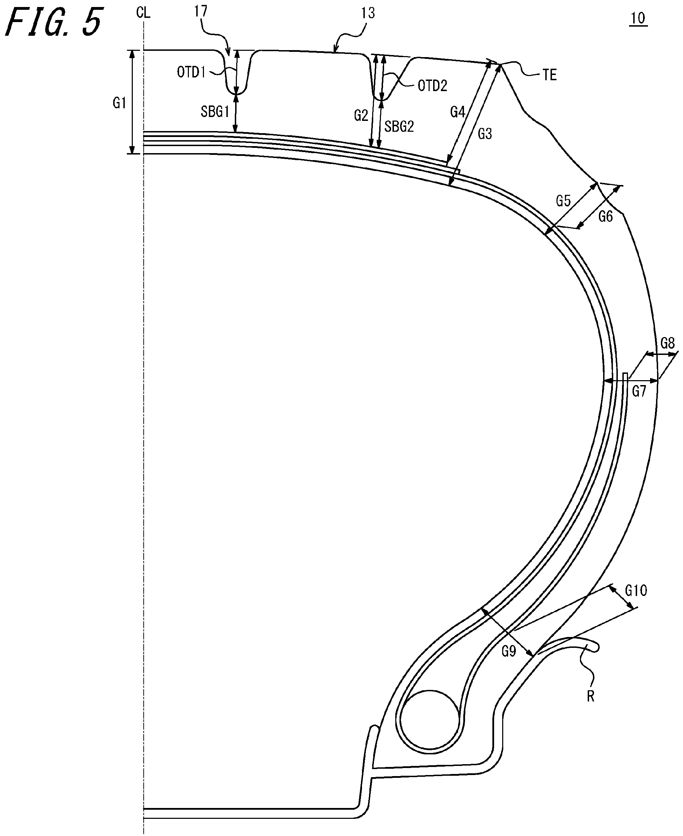

FIG. 5 is a cross-sectional view in the tire width direction for explaining each gauge of the tire and the depth of each circumferential main groove. FIG. 5 illustrates only one half portion in the tire width direction with the tire equatorial plane CL as the boundary. The other half portion in the tire width direction may have the same gauges (i.e. symmetric with respect to the tire equatorial plane CL). Alternatively, one and the other half portions in the tire width direction with the tire equatorial plane CL as the boundary may be asymmetric in gauge (at least one gauge in the drawing). In such a case, the half portions may have different gauges within the below-described range. As illustrated in FIG. 5, the gauge G1 on the tire equatorial plane CL (measured in the tire radial direction) is preferably 5 mm to 15 mm. The groove depth OTD1 of the circumferential main groove nearest the tire equatorial plane CL is preferably 2 mm to 10 mm. The gauge SBG1 from the groove bottom of the circumferential main groove nearest the tire equatorial plane CL to the outermost reinforcement member in the tire radial direction is preferably 0.5 mm to 4.5 mm. The groove depth OTD2 of the outermost circumferential main groove in the tire width direction is preferably 3 mm to 8 mm. The gauge SBG2 from the groove bottom of the outermost circumferential main groove in the tire width direction to the outermost reinforcement member in the tire radial direction is preferably 0.5 mm to 4.5 mm. As illustrated in FIG. 5, the gauge G3 of the whole tread rubber at a tread edge TE is preferably 5 mm to 30 mm, and the gauge G4 from the tread surface to the outermost reinforcement member in the tire radial direction at the tread edge TE is preferably 3 mm to 20 mm. Herein, "tread edge" denotes each of both ends of the contact patch in the tire width direction when the tire and wheel assembly is filled to the prescribed internal pressure and placed under the maximum load. At the tread edge TE, too, the gauges G3 and G4 are each measured in a direction normal to the contour line (virtual line in the case where there is a groove) defining the tread surface of the tread portion. In the case where the tread edge TE is an endpoint, however, the gauge G4 is measured in a direction between the tread edge TE and the end of the outermost belt layer in the tire radial direction, and the gauge G3 is measured in the same direction. As illustrated in FIG. 5, the gauge G5 of the whole rubber at a middle point between the tread edge TE and the tire maximum width position in the tire width direction is preferably 2 mm to 10 mm, and the gauge G6 from the middle point to the carcass body portion is preferably 1 mm to 8 mm. The gauge G7 at the tire maximum width position is preferably 1.0 mm to 8 mm. The gauge G8 from the tire maximum width position to the carcass (the carcass folded-up portion in the illustrated example) is preferably 0.5 mm to 5 mm. The gauge G9 at a tire radial outermost point (separation point) that is in contact with the rim flange in the reference state is preferably 5 mm to 35 mm. The gauge G10 from the separation point to the carcass folded-up portion is preferably 2 mm to 10 mm. G5 to G10 are each measured in a direction normal to the outer contour line of the tire.

Intensive study was conducted and revealed the following: Since the power reception coil (and optionally the in-wheel motor) is installed in the foregoing tire and wheel assembly, there is a possibility that the load supported by the tire increases and causes large strain in the shoulder portion of the tire and generates heat, and consequently the durability of the tire decreases.

In view of this, the tire 10 includes a reinforcement member (the belt 15 in this example) composed of one or more reinforcement layers (two belt layers 15A and 15B in this example) that are each a cord layer coated with rubber. Suppose, in the foregoing reference state, a shoulder region is a region outward in the tire width direction from a position away from each of both tire widthwise ends of a maximum width reinforcement layer (the innermost belt layer 15A in the tire radial direction in this example) having the maximum width in the tire width direction out of the one or more reinforcement layers and inward in the tire width direction by 5 % of the width of the maximum width reinforcement layer in the tire width direction. In this embodiment, a cord end (not illustrated in FIG. 2) of at least one reinforcement layer (both of the belt layers 15A and 15B in this example) is located inward from the shoulder region in the tire width direction in the foregoing reference state. Thus, in the tire 10, a cord end (not illustrated in FIG. 2) of at least one reinforcement layer (both of the belt layers 15A and 15B in this example) is located inward from the shoulder region in the tire width direction in the foregoing reference state. Since the cord end that tends to be the core of a failure is not located in the shoulder region where strain increases due to a load increase caused by including the power reception coil 31, a failure that occurs from the cord end can be prevented and the durability of the tire can be improved.

If a cord end of at least one reinforcement layer is located inward from the shoulder region in the tire width direction, the foregoing effect can be achieved for the reinforcement layer. If at least one of a cord starting end and a cord terminating end is located inward from the shoulder region in the tire width direction, the foregoing effect can be achieved for the end. If both of the cord starting end and the cord terminating end are located inward from the shoulder region in the tire width direction, the foregoing effect can be achieved for both ends.

Preferably, in the reference state, the cord end of every reinforcement layer is located inward from the shoulder region in the tire width direction, as in the foregoing example. Thus, a failure that occurs from the cord end can be prevented for all reinforcement layers, and the durability of the tire can be further improved.

Preferably, in the reference state, the cord end of at least one reinforcement layer is located inward in the tire width direction from a tire widthwise position away from each of both tire widthwise ends of the maximum width reinforcement layer inward in the tire width direction by 10 % of the width of the maximum width reinforcement layer in the tire width direction. Thus, the cord end is located further away from the shoulder region, so that a failure that occurs from the cord end can be prevented and the durability of the tire can be further improved.

Preferably, in the reference state, the cord end of every reinforcement layer is located inward in the tire width direction from a tire widthwise position away from each of both tire widthwise ends of the maximum width reinforcement layer inward in the tire width direction by 10 % of the width of the maximum width reinforcement layer in the tire width direction. Thus, the cord end is located further away from the shoulder region for all reinforcement layers, so that a failure that occurs from the cord end can be prevented and the durability of the tire can be further improved.

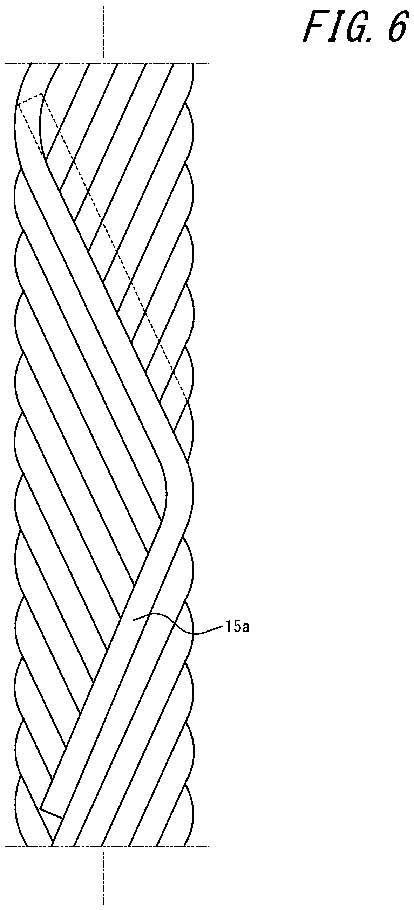

FIG. 6 is a plan view illustrating the structure of an inclined belt layer. As illustrated in FIG. 6, a reinforcement member (inclined belt) is preferably in a state in which each strip member 15a is spirally wound in the tire circumferential direction by repeatedly extending from one widthwise end to the other widthwise end, being folded back at the other widthwise end, extending from the other widthwise end to the one widthwise end, being folded back at the one widthwise end, and extending from the one widthwise end to the other widthwise end (endless belt structure). Here, an end (starting end and/or terminating end) of the strip member is away in the width direction from the widthwise end of the reinforcement layer (belt layer) by a distance set as appropriate (i.e. the winding of the strip member starts or ends at a position away in the width direction from the widthwise end of the reinforcement layer (belt layer) by the set distance) so that the end will not be located in the shoulder region. Thus, the cord end can be located inward from the shoulder region in the tire width direction. The tire widthwise position of the cord starting end and the tire widthwise position of the cord terminating end may be the same or different.

It is preferable that the reinforcement layer is an inclined belt layer formed by inclining each cord with respect to the tire circumferential direction, and the reinforcement member is an inclined belt. In the case where the reinforcement layer is an inclined belt, a failure from the cord end of the inclined belt can be prevented and the durability of the tire can be improved. The inclination angle of the cord with respect to the tire circumferential direction is not limited, but may be 5° to 45°.

It is also preferable that the reinforcement layer is a circumferential belt layer formed by extending each cord in the tire circumferential direction, and the reinforcement member is a circumferential belt. In this case, the width of the circumferential belt layer in the tire width direction is adjusted so that the outermost cord in the tire width direction will be located inward from the shoulder region in the tire width direction. Thus, in the case where the reinforcement layer is a circumferential belt, a failure from the cord end of the circumferential belt can be prevented and the durability of the tire can be improved.

It is also preferable that the reinforcement layer includes an inclined belt layer formed by inclining each cord with respect to the tire circumferential direction and a circumferential belt layer formed by extending each cord in the tire circumferential direction and located on the tire radial outer side or inner side of the inclined belt layer, and the reinforcement member includes an inclined belt and a circumferential belt located on the tire radial outer side or inner side of the inclined belt. In such a structure in which a circumferential belt is located on the tire radial outer side or inner side of an inclined belt, a failure from the cord end of the inclined belt layer and/or the circumferential belt layer can be prevented and the durability of the tire can be improved.

The tire 10 preferably includes a reinforcement member (the inclined belt 15 in this example) composed of two or more reinforcement layers (inclined belt layers in this example) that are each a cord layer coated with rubber.

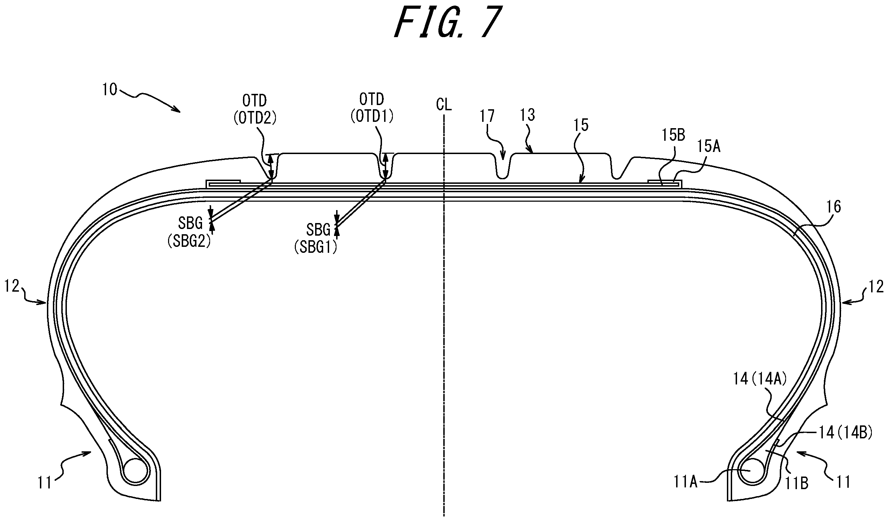

As illustrated in FIG. 7, the cord end (for example, in the case where the cord end and the tire widthwise end of the reinforcement layer have the same tire widthwise position) of at least one reinforcement layer (the belt layer 15B on the tire radial outer side out of the two belt layers in the illustrated example) is surrounded by another reinforcement layer (the belt layer 15B in the illustrated example) located on the tire radial inner side of the at least one reinforcement layer (the belt layer 15B in the illustrated example), as a result of the end of the other reinforcement layer (the belt layer 15A in the illustrated example) being folded back from inside to outside in the tire radial direction and terminating on the tire radial outer side of the at least one belt layer (the belt layer 15B in the illustrated example) (Alternatively, the cord end of at least one reinforcement layer may be surrounded by another reinforcement layer located on the tire radial outer side of the at least one reinforcement layer as a result of the end of the other reinforcement layer being folded back from outside to inside in the tire radial direction and terminating on the tire radial inner side of the at least one reinforcement layer).

In this example, the cord end of at least one reinforcement layer is surrounded by another reinforcement layer as a result of the other reinforcement layer being folded back from inside to outside in the tire radial direction or from outside to inside in the tire radial direction.

Thus, in the tire 10, the cord end of at least one reinforcement layer is surrounded by another reinforcement layer as a result of the other reinforcement layer being folded back from inside to outside in the tire radial direction or from outside to inside in the tire radial direction. Therefore, for example even in the case where the cord end is located in the shoulder region where strain increases due to a load increase caused by including the power reception coil 31, the cord end can be protected from strain because the cord end is surrounded by another reinforcement layer, so that a failure that occurs from the cord end can be prevented and the durability of the tire can be improved.

In particular, it is preferable that the cord end of at least one reinforcement layer (the belt layer 15B on the tire radial outer side out of the two belt layers in the illustrated example) is surrounded by another reinforcement layer (the belt layer 15B in the illustrated example) located on the tire radial inner side of the at least one reinforcement layer (the belt layer 15B in the illustrated example) as a result of the end of the other reinforcement layer (the belt layer 15A in the illustrated example) being folded back from inside to outside in the tire radial direction and terminating on the tire radial outer side of the at least one belt layer (the belt layer 15B in the illustrated example), as in the example illustrated in FIG. 7. This can improve the maneuverability such as cornering performance.

The reinforcement layer is preferably an inclined belt layer formed by inclining each cord with respect to the tire circumferential direction, as in this embodiment. The inclination angle of the cord with respect to the tire circumferential direction is not limited, and may be, for example, 5° to 45°.

The at least one reinforcement layer whose cord end is surrounded may be a circumferential belt layer extending in the tire circumferential direction. In this case, too, a failure from the cord end of the circumferential belt layer can be prevented and the durability of the tire can be improved.

Although the cord end and the tire widthwise end of the reinforcement layer have the same tire widthwise position in the foregoing example, their tire widthwise positions may be different. In this case, too, the foregoing effect can be achieved as long as the cord end is surrounded by another reinforcement layer as mentioned above.

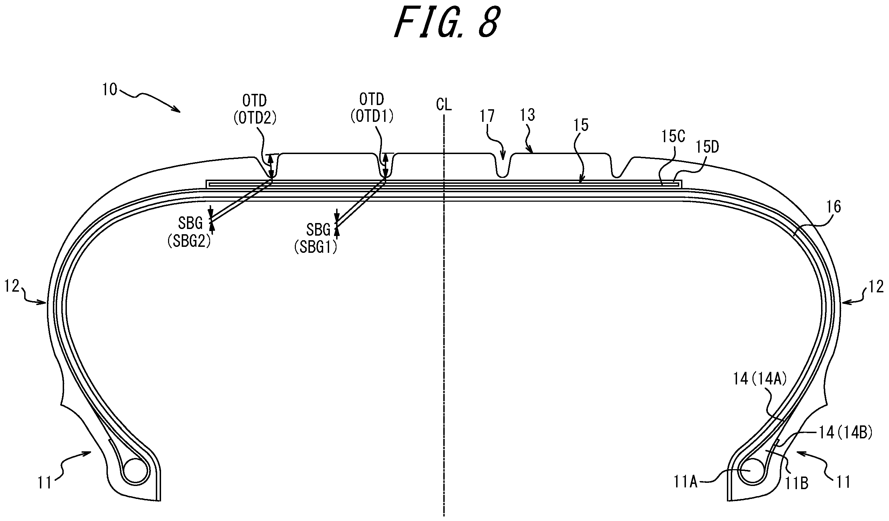

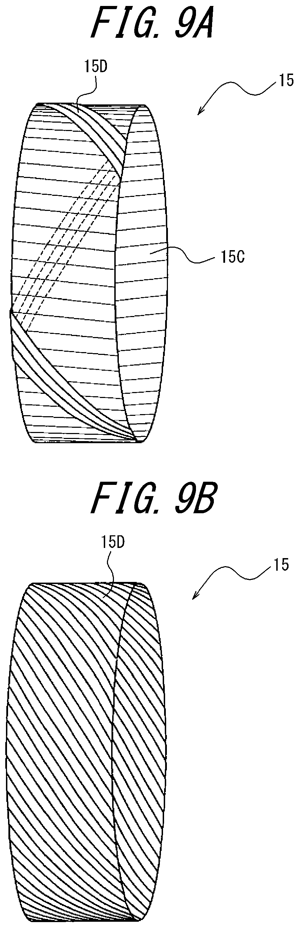

FIG. 8 is a cross-sectional view of a tire of another example in the tire width direction. FIG. 9A and FIG. 9B are each a perspective view for explaining a reinforcement member in FIG. 8.

As illustrated in FIG. 8, FIG. 9A, and FIG. 9B, preferably, at least one reinforcement layer (a belt layer 15C in FIG. 8) is a ring-shaped core reinforcement layer, and another reinforcement layer (a belt layer 15D in FIG. 8) is a sheath reinforcement layer in a state of being spirally wound in the tire circumferential direction by repeatedly extending from one widthwise end to the other widthwise end of the core reinforcement layer 15C, being folded back from inside to outside in the tire radial direction at the other widthwise end, extending from the other widthwise end to the one widthwise end, being folded back from outside to inside in the tire radial direction at the one widthwise end, and extending from the one widthwise end to the other widthwise end, with reference to FIG. 9A (the completed state is illustrated in FIG. 9B). The core reinforcement layer may be one or more reinforcement layers that are each an organic fiber cord layer coated with rubber, or may be made of rubber alone. The core reinforcement layer is preferably a cord layer coated with rubber.

In the tire 10 of such a structure, too, the cord end of at least one reinforcement layer is surrounded by another reinforcement layer as a result of the other reinforcement layer being folded back from inside to outside in the tire radial direction or from outside to inside in the tire radial direction. Therefore, for example even in the case where the cord end is located in the shoulder region where strain increases due to a load increase caused by including the power reception coil 31, the cord end can be protected from strain because the cord end is surrounded by another reinforcement layer, so that a failure that occurs from the cord end can be prevented and the durability of the tire can be improved.

In particular, it is preferable that at least one reinforcement layer (the belt layer 15C) is a ring-shaped core reinforcement layer, and another reinforcement layer (the belt layer 15D) is a sheath reinforcement layer in a state of being spirally wound in the tire circumferential direction by repeatedly extending from one widthwise end to the other widthwise end of the core reinforcement layer, being folded back from inside to outside in the tire radial direction at the other widthwise end, extending from the other widthwise end to the one widthwise end, being folded back from outside to inside in the tire radial direction at the one widthwise end, and extending from the one widthwise end to the other widthwise end, as in this example. Thus, the durability of the belt can be improved.

In the example illustrated in FIG. 8, FIG. 9A, and FIG. 9B, preferably, the core reinforcement layer is a core belt layer whose cords extend in the tire circumferential direction or extend in a state of being inclined at an inclination angle of 30° to 90° with respect to the tire circumferential direction, and the sheath reinforcement layer is a sheath belt layer whose cords extend in a state of being inclined at an inclination angle of 45° or less with respect to the tire circumferential direction. More preferably, the inclination angle of the cords of the core belt layer with respect to the tire width direction is less than the inclination angle of the cords of the sheath belt layer with respect to the tire width direction.

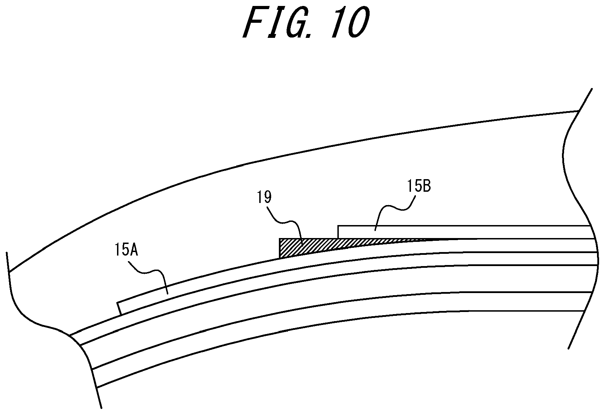

The tire 10 preferably includes a reinforcement member (the inclined belt 15 in this example) composed of two or more reinforcement layers (inclined belt layers in this example) that are each a cord layer coated with rubber. FIG. 10 is a cross-sectional view illustrating inclined belt layers and an interlayer rubber.

As illustrated in FIG. 10, between at least one pair of reinforcement layers adjacent in the tire radial direction (between the belt layers 15A and 15B in the example illustrated in FIG. 10), an interlayer rubber 19 extending in a tire widthwise region including the tire widthwise end of the reinforcement layer (the belt layer 15B in the illustrated example) located on the tire radial outer side out of the two reinforcement layers is provided. Therefore, for example even in the case where the cord end of the belt layer is located in the shoulder region where strain increases due to a load increase caused by including the power reception coil 31, strain can be absorbed by the interlayer rubber 19, and the distance between the core ends of the two belt layers can be maintained by the presence of the interlayer rubber 19. Accordingly, a failure that occurs from the cord end (especially the cord end of the belt layer 15B on the tire radial outer side) can be prevented, and the durability of the tire can be improved. In this example, the tire widthwise position of the cord end and the tire widthwise position of the tire widthwise end of each inclined belt layer are the same.

The interlayer rubber may extend outward in the tire width direction from the tire widthwise end of the reinforcement layer located on the tire radial inner side out of the two reinforcement layers, extend to a position inward from the tire widthwise end of the reinforcement layer located on the tire radial inner side, or extend to the same position as the tire widthwise position of the tire widthwise end of the reinforcement layer located on the tire radial inner side.

The interlayer rubber may cover the end surface of the reinforcement layer located on the tire radial outer side out of the two reinforcement layers, or not cover the end surface as illustrated in the drawing.

The 100 % modulus of the interlayer rubber is preferably 3.0 MPa or more. Thus, possible strain is absorbed sufficiently, so that a failure that occurs from the cord end can be further prevented and the durability of the tire can be further improved. For the same reason, the 100 % modulus of the interlayer rubber is preferably 5.0 MPa or more. The 100 % modulus of the interlayer rubber is preferably 20.0 MPa or less, from the viewpoint of reducing the rigidity difference from rubber in the surroundings.

Preferably, the interlayer rubber is sheet-shaped, and has a maximum thickness of 3 mm or less in the tire radial direction. In this way, a weight increase due to the interlayer rubber can be suppressed. For the same reason, the maximum thickness of the interlayer rubber is more preferably 2 mm or less. The maximum thickness of the interlayer rubber is preferably 0.5 mm or more, from the viewpoint of sufficiently absorbing possible strain.

Preferably, the thickness of the interlayer rubber in the tire radial direction gradually increases outward in the tire width direction, in a cross section in the tire width direction. Thus, the distance between the belt layers is further secured on the belt layer end side, so that a failure that occurs from the cord end can be further prevented and the durability of the tire can be further improved. Alternatively, the thickness of the interlayer rubber in a cross section in the tire width direction may be uniform.

It is preferable that the two reinforcement layers between which the interlayer rubber is located are two inclined belt layers whose cords extend in a state of being inclined at an inclination angle of 20° to 70° with respect to the tire circumferential direction. In the case where the reinforcement layers are inclined belt layers, a failure that occurs from the cord end of any inclined belt layer can be prevented, and the durability of the tire can be improved.

It is also preferable that the two reinforcement layers between which the interlayer rubber is located are made up of one inclined belt layer whose cords extend in a state of being inclined at an inclination angle of 45° or less with respect to the tire width direction and one circumferential belt layer whose cords extend in the tire circumferential direction. In the case where the reinforcement layers are an inclined belt layer and a circumferential belt layer, a failure that occurs from the cord end of any of the inclined belt layer and the circumferential belt layer can be prevented, and the durability of the tire can be improved.

It is also preferable that the two reinforcement layers between which the interlayer rubber is located are two circumferential belt layers whose cords extend in the tire circumferential direction. In the case where the reinforcement layers are circumferential belt layers, a failure that occurs from the cord end of any circumferential belt layer can be prevented, and the durability of the tire can be improved.

Study was conducted and revealed the following: If foreign matter enters between the road surface and the tire during power feeding (especially if foreign matter enters from the stepping-in side or the kicking-out side), there is a possibility that the magnetic flux is interfered by the foreign matter and the power reception efficiency decreases.

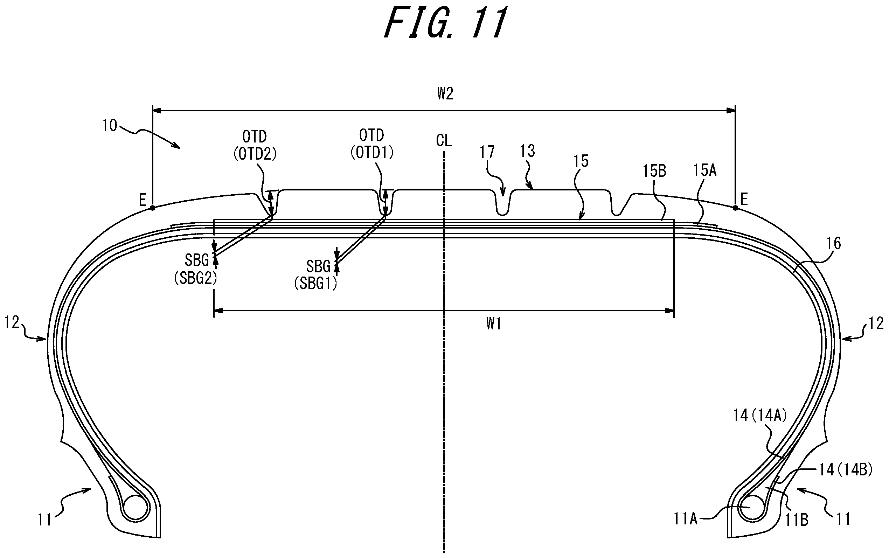

In view of this, it is preferable that the tire 10 includes the belt 15 composed of one or more (two in the illustrated example) belt layers, and, in the foregoing reference state, the width W1 in the tire width direction of a minimum width belt layer (the belt layer 15B in the illustrated example) having the minimum width in the tire width direction out of the one or more belt layers is less than or equal to the ground contact width W2 which is the distance between ground contact edges E in the tire width direction, as illustrated in FIG. 11. Herein, "ground contact edge E" is the outermost point of the contact patch in the tire width direction in the foregoing load state (the state in which the tire and wheel assembly is filled to the prescribed internal pressure and placed under the maximum load). This increases the deformation of the shoulder portion of the tire and increases the ground contact length of the shoulder portion (as compared with the case where W1 > W2). Consequently, foreign matter is less likely to enter between the road surface and the tire (especially from the stepping-in side or the kicking-out side) during power feeding, and a decrease in power reception efficiency caused by the magnetic flux being interfered by foreign matter can be suppressed.

The ratio W1/W2 is preferably 0.98 or less. This further increases the ground contact length of the shoulder portion. Hence, the entrance of foreign matter can be further prevented, and a decrease in power reception efficiency can be further suppressed. For the same reason, the ratio W1/W2 is more preferably 0.9 or less, and further preferably 0.7 or less. The ratio W1/W2 is preferably 0.5 or more, from the viewpoint of enhancing the hoop effect of the belt and improving the steering stability.

Study was conducted and revealed the following: If foreign matter enters between the road surface and the tire during power feeding (especially if foreign matter enters from the width direction), there is a possibility that the magnetic flux is interfered by the foreign matter and the power reception efficiency decreases.

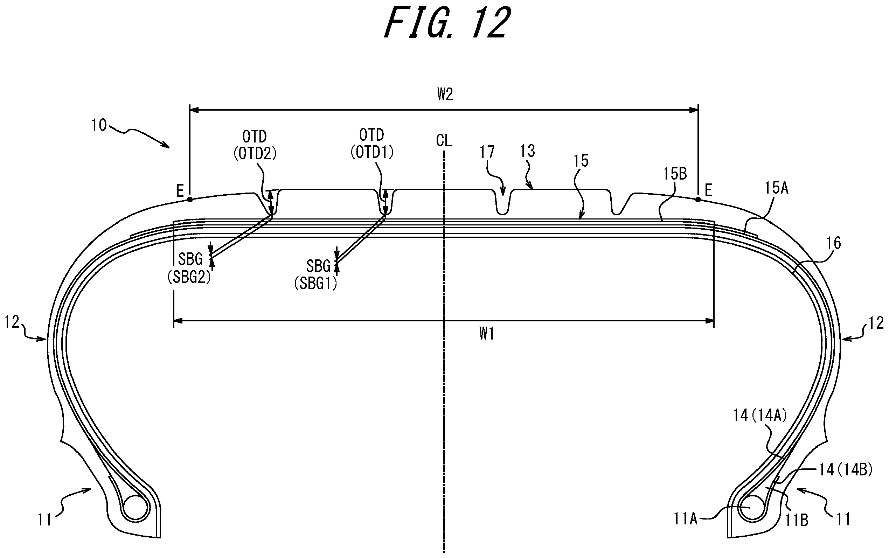

In view of this, it is also preferable that the tire 10 includes the belt 15 composed of one or more (two in the illustrated example) belt layers, and, in the foregoing reference state, the width W1 in the tire width direction of a minimum width belt layer (the belt layer 15B in the illustrated example) having the minimum width in the tire width direction out of the one or more belt layers is greater than the ground contact width W2 which is the distance between ground contact edges E in the tire width direction, as illustrated in FIG. 12. Herein, "ground contact edge E" is the outermost point of the contact patch in the tire width direction in the foregoing load state. This reduces the deformation of the shoulder portion of the tire, and decreases the ground contact length of the shoulder portion and increases the ground contact width (as compared with the case where W1 ≤ W2). Consequently, foreign matter is less likely to enter between the road surface and the tire (especially from the width direction) during power feeding, and a decrease in power reception efficiency caused by the magnetic flux being interfered by foreign matter can be suppressed.

The ratio W1/W2 is preferably 1.02 or more. This further increases the ground contact width. Hence, the entrance of foreign matter can be further prevented, and a decrease in power reception efficiency can be further suppressed. For the same reason, the ratio W1/W2 is more preferably 1.2 or more, and further preferably 1.3 or more. The ratio W1/W2 is preferably 1.5 or less, from the viewpoint of suppressing a weight increase due to the belt layer.

With reference to FIG. 12, it is preferable that, in the foregoing reference state, the tire widthwise end of the minimum width belt layer (the belt layer 15B in the illustrated example) having the minimum width in the tire width direction out of the one or more belt layers is located outward in the tire width direction from the outermost circumferential main groove 17 located outermost in the tire width direction out of the one or more circumferential main groove 17. This reduces the deformation of the shoulder portion of the tire, and decreases the ground contact length of the shoulder portion and increases the ground contact width (as compared with the case where the tire widthwise end of the minimum width belt layer is located inward in the tire width direction from the outermost circumferential main groove). Consequently, foreign matter is less likely to enter between the road surface and the tire (especially from the width direction) during power feeding, and a decrease in power reception efficiency caused by the magnetic flux being interfered by foreign matter can be suppressed.

In the foregoing reference state, the tire widthwise end of the minimum width belt layer is preferably located 2 mm or more outward in the tire width direction from the outermost circumferential main groove. As a result of the tire widthwise end of the minimum width belt layer being located 2 mm or more outward, the ground contact width is further increased, so that the entrance of foreign matter between the road surface and the tire (especially from the width direction) can be further prevented and a decrease in power reception efficiency caused by the magnetic flux being interfered by foreign matter can be further suppressed. For the same reason, in the foregoing reference state, the tire widthwise end of the minimum width belt layer is more preferably located 5 mm or more outward in the tire width direction from the outermost circumferential main groove. The tire widthwise end of the minimum width belt layer is preferably located 20 mm or less outward in the tire width direction from the outermost circumferential main groove, from the viewpoint of suppressing a weight increase due to the belt layer.

Preferably, the tire 10 includes a belt composed of one or more belt layers that are each an organic fiber (aramid fiber in this example) cord layer coated with rubber, and the cord count in (each) belt layer is 10 to 50 per 50 mm. If the cord count in the belt layer is more than 50 per 50 mm, the rate of strain propagation between cords is high, which can cause a failure. If the cord count in the belt layer is less than 10 per 50 mm, the power reception efficiency decreases because rubber has lower magnetic permeability than organic fiber and tends to interfere with the magnetic flux from the power transmission coil 31. As a result of the cord count in the belt layer being in the foregoing range, the durability of the tire can be improved while improving the power reception efficiency.

In some cases, the cord count in the belt layer is preferably 15 to 45 per 50 mm. For example, in the case where the tire and wheel assembly is used for autonomous driving, running is possible even when the hoop effect of the belt is not very high, and improvement in power reception efficiency is particularly needed. As a result of the cord count in the belt layer being 15 or more per 50 mm, high power reception efficiency can be achieved. As a result of the cord count in the belt layer being 45 or less per 50 mm, sufficient running performance of the tire can be ensured while further improving the durability of the tire. The tire and wheel assembly used for autonomous driving may include, for example, an in-wheel motor.

Examples of organic fibers that can be used include aramid fiber, PET fiber, and nylon fiber.

There is a possibility that the vehicle-installed inside of the tire and wheel assembly is the magnetic flux passing route, depending on the arrangement of the power reception coil and the power transmission coil.

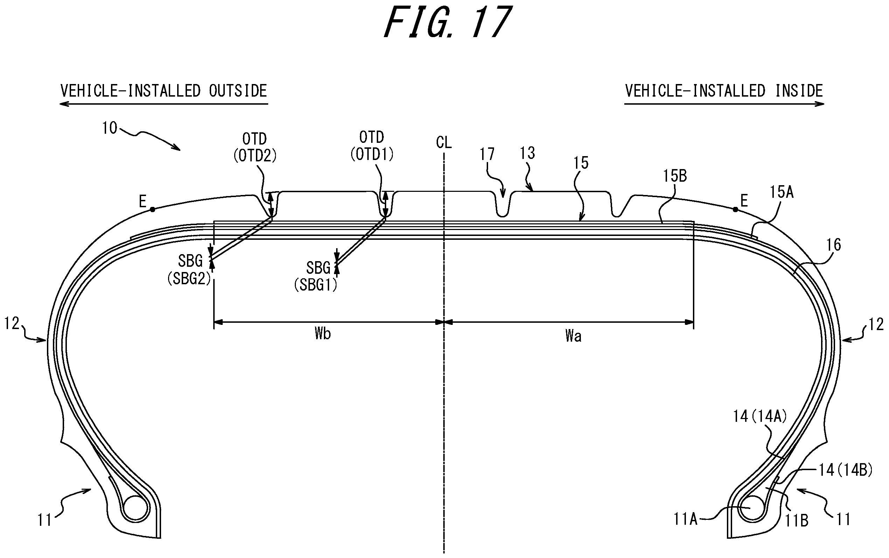

It is preferable that the tire 10 includes a belt composed of one or more belt layers that are each an organic fiber cord layer coated with rubber, and, in the foregoing reference state, the width Wa in the tire width direction of a minimum width belt layer (the belt layer 15B in the illustrated example) having the minimum width in the tire width direction out of the one or more belt layers in the tire widthwise half portion on the vehicle-installed inside is greater than the width Wb in the tire width direction of the minimum width belt layer in the tire widthwise half portion on the vehicle-installed outside, as illustrated in FIG. 17.

In this example, organic fiber is used in the cords of the belt layer, which is higher in magnetic permeability than rubber. Therefore, the magnetic flux from the power transmission coil 31 is less likely to be interfered when the belt layer is provided.

Hence, in this example, the magnetic flux from the power transmission coil 31 is prevented from being interfered in the tire widthwise half portion on the vehicle-installed inside. In this example, high power reception efficiency can be achieved in automatic power feeding using the electromagnetic induction method.

The width of the minimum width belt layer in the tire width direction is preferably 102 % or more of the ground contact width. Since the magnetic flux from the power transmission coil 31 is less likely to be interfered when the belt layer is provided as mentioned above, by setting the tire widthwise region to be 102 % or more of the ground contact width, the power reception efficiency can be further enhanced. For the same reason, the width of the minimum width belt layer in the tire width direction is more preferably 105 % or more of the ground contact width, and further preferably 125 % or more of the ground contact width. The width of the minimum width belt layer in the tire width direction is preferably 135 % or less of the ground contact width, from the viewpoint of suppressing a weight increase due to the belt layer.

The ratio Wa/Wb is preferably 1.1 or more. Thus, the magnetic flux from the power transmission coil 31 is less likely to be interfered in the tire widthwise half portion on the vehicle-installed inside, so that the power reception efficiency can be further improved. For the same reason, the ratio Wa/Wb is preferably 1.2 or more, and further preferably 1.3 or more. The ratio Wa/Wb is preferably 1.5 or less, from the viewpoint of suppressing a weight increase due to the belt layer.

If there is a possibility that the magnetic flux passes the vehicle-installed inside of the belt layer during power feeding, high power feeding efficiency can be achieved by the foregoing effect. This is particularly effective, for example, in the case where part or whole of the power reception coil 31 is located on the vehicle-installed inside or in the case where part or whole of the power reception coil 31 is located on the vehicle-installed outside but the axial direction perpendicular to the surface of the power reception coil is inclined to the vehicle-installed inside outward in the tire radial direction.

Examples of organic fibers that can be used include aramid fiber, PET fiber, and nylon fiber.

There is a possibility that the vehicle-installed outside of the tire and wheel assembly is the magnetic flux passing route, depending on the arrangement of the power reception coil and the power transmission coil.

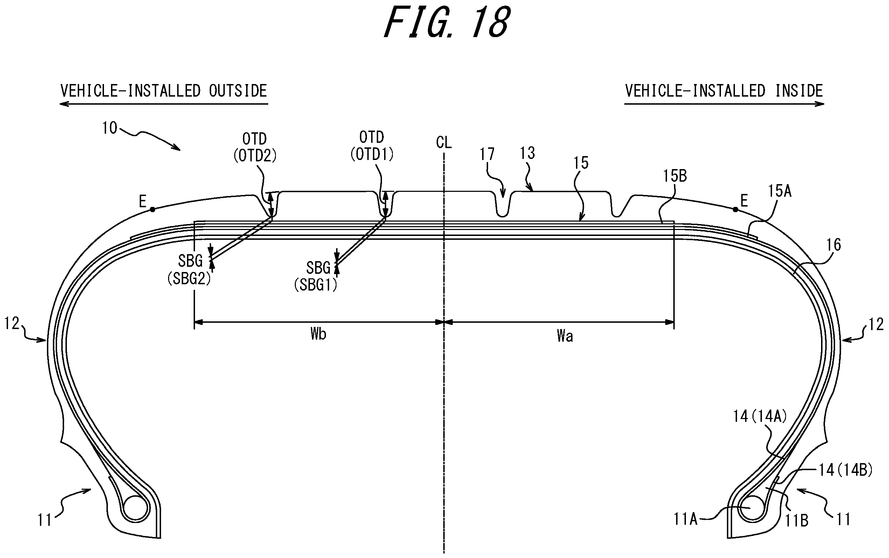

It is also preferable that the tire 10 includes a belt composed of one or more belt layers that are each an organic fiber cord layer coated with rubber, and, in the foregoing reference state, the width Wb in the tire width direction of a minimum width belt layer (the belt layer 15B in the illustrated example) having the minimum width in the tire width direction out of the one or more belt layers in the tire widthwise half portion on the vehicle-installed outside is greater than the width Wa in the tire width direction of the minimum width belt layer in the tire widthwise half portion on the vehicle-installed inside, as illustrated in FIG. 18.

In this example, the width Wb of the minimum width belt layer in the tire width direction in the tire widthwise half portion on the vehicle-installed outside is greater than the width Wa of the minimum width belt layer in the tire width direction in the tire widthwise half portion on the vehicle-installed inside. In this embodiment, organic fiber is used in the cords of the belt layer, which is higher in magnetic permeability than rubber. Therefore, the magnetic flux from the power transmission coil 31 is less likely to be interfered when the belt layer is provided.

Hence, in this example, the magnetic flux from the power transmission coil 31 is prevented from being interfered in the tire widthwise half portion on the vehicle-installed outside. In this example, high power reception efficiency can be achieved in automatic power feeding using the electromagnetic induction method.

The width of the minimum width belt layer in the tire width direction is preferably 102 % or more of the ground contact width. Since the magnetic flux from the power transmission coil 31 is less likely to be interfered when the belt layer is provided as mentioned above, by setting the tire widthwise region to be 102 % or more of the ground contact width, the power reception efficiency can be further enhanced. For the same reason, the width of the minimum width belt layer in the tire width direction is more preferably 105 % or more of the ground contact width, and further preferably 125 % or more of the ground contact width. The width of the minimum width belt layer in the tire width direction is preferably 135 % or less of the ground contact width, from the viewpoint of suppressing a weight increase due to the belt layer.

The ratio Wb/Wa is preferably 1.1 or more. Thus, the magnetic flux from the power transmission coil 31 is less likely to be interfered in the tire widthwise half portion on the vehicle-installed outside, so that the power reception efficiency can be further improved. For the same reason, the ratio Wb/Wa is preferably 1.2 or more, and further preferably 1.3 or more. The ratio Wb/Wa is preferably 1.5 or less, from the viewpoint of suppressing a weight increase due to the belt layer.

If there is a possibility that the magnetic flux passes the vehicle-installed outside of the belt layer during power feeding, high power feeding efficiency can be achieved by the foregoing effect. This is particularly effective, for example, in the case where part or whole of the power reception coil 31 is located on the vehicle-installed outside or in the case where part or whole of the power reception coil 31 is located on the vehicle-installed inside but the axial direction perpendicular to the surface of the power reception coil is inclined to the vehicle-installed outside outward in the tire radial direction.

Examples of organic fibers that can be used include aramid fiber, PET fiber, and nylon fiber.

Preferably, the tire 10 includes a carcass 14 composed of one or more carcass plies, and the cords of each carcass ply are inclined at an inclination angle of 80° or more with respect to the tire circumferential direction. As a result of the cords of each carcass ply being inclined at an inclination angle of 80° or more with respect to the tire circumferential direction, the deflection of the tire when the tire and wheel assembly is loaded can be reduced (as compared with the case where the cords of each carcass ply are inclined at an inclination angle of less than 80° with respect to the tire circumferential direction). Thus, variation in the distance between the power transmission coil and the reception coil can be reduced, and the power reception efficiency can be improved.

The inclination angle of the cords of each carcass ply with respect to the tire circumferential direction is more preferably 85° or more, and further preferably 90°, from the viewpoint of reducing the deflection of the tire when loaded and improving the power reception efficiency.

The number of carcass plies is preferably two or more, from the viewpoint of reducing the deflection of the tire when loaded and improving the power reception efficiency. For example, the number of carcass plies may be two or three. The number of carcass plies is preferably one, from the viewpoint of suppressing a weight increase due to the carcass.

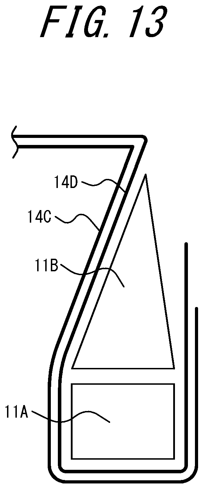

FIG. 13 is a schematic view illustrating an example of a carcass structure.

As illustrated in FIG. 13, the carcass preferably includes one or more (two in the example illustrated in FIG. 13) up plies 14C and 14D each of which is composed of a carcass body portion toroidally extending between a pair of bead portions and a carcass wound portion formed by a carcass wound-up portion extending from the carcass body portion and wound up from the tire widthwise inner side to the tire widthwise outer side of the bead core. With such combination, it is possible to suppress a weight increase due to the carcass and also improve the power reception efficiency in a well-balanced manner. The bead core may include an inner bead core on the tire widthwise inner side and an outer bead core on the tire widthwise outer side, and the carcass may be located between the inner bead core and the outer bead core.

Preferably, the end of the up ply whose wound-up portion is located on the tire widthwise inner side is located outward in the tire radial direction from the end of the up ply whose wound-up portion is located on the tire widthwise outer side, as illustrated in the drawing. Alternatively, the end of the up ply whose wound-up portion is located on the tire widthwise inner side may be located inward in the tire radial direction from the end of the up ply whose wound-up portion is located on the tire widthwise outer side, or located at the same position as the end of the up ply whose wound-up portion is located on the tire widthwise outer side.

Study was conducted and revealed the need to improve the resistance to external damage of the tire given that the power reception coil is mounted.

Preferably, the tire 10 includes a carcass 14 composed of one or more carcass plies toroidally extending between a pair of bead cores, and each carcass ply is composed of a carcass body portion 14A toroidally extending between the pair of bead cores and a carcass folded-up portion 14B extending from the carcass body portion, being folded back from inside to outside in the tire width direction around the bead core, and extending outward in the tire radial direction. Thus, each carcass ply is composed of the carcass body portion 14A toroidally extending between the pair of bead cores and the carcass folded-up portion 14B extending from the carcass body portion, being folded back from inside to outside in the tire width direction around the bead core, and extending outward in the tire radial direction. Since the carcass folded-up portion 14B can protect the members such as the carcass body portion and the power reception coil from external damage to the tire (particularly the sidewall portion), the resistance to external damage of the tire can be enhanced.

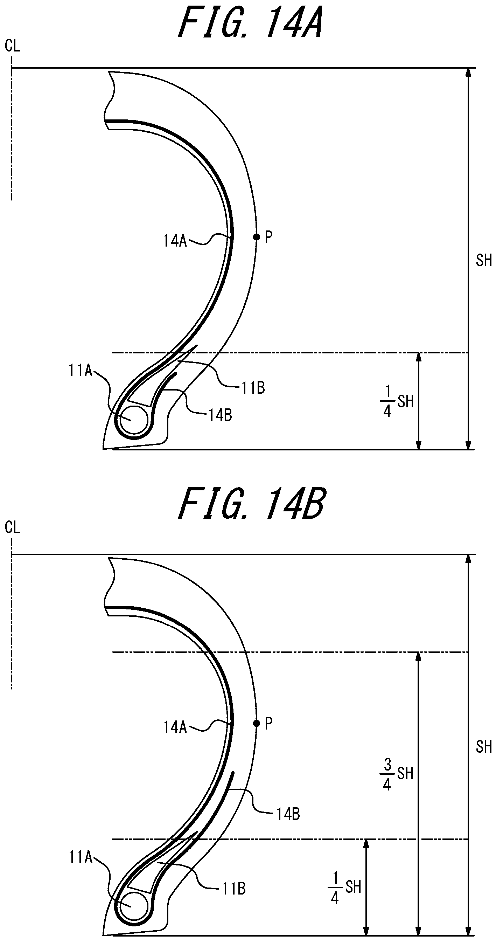

FIG. 14A is a schematic view illustrating an example of a carcass structure. As illustrated in FIG. 14A, it is preferable that, in the foregoing reference state, the end of the carcass folded-up portion is located in a tire radial region from the tire radial inner edge of the tire radial region corresponding to the tire section height SH to a position away from the tire radial inner edge outward in the tire radiation direction by less than 1/4 of the tire section height SH. Thus, a weight increase due to the carcass can be suppressed while enhancing the resistance to external damage as mentioned above.

FIG. 14B is a schematic view illustrating another example of a carcass structure. As illustrated in FIG. 14B, it is also preferable that, in the foregoing reference state, the end of the carcass folded-up portion is located in a tire radial region from a position away from the tire radial inner edge of the tire radial region corresponding to the tire section height SH outward in the tire radial direction by 1/4 or more of the tire section height SH to a position away from the tire radial inner edge outward in the tire radial direction by less than 3/4 of the tire section height SH. Since the carcass folded-up portion can protect a larger tire radial region from external damage than in the carcass structure illustrated in FIG. 14A, the resistance to external damage of the tire can be further improved. In the carcass structure illustrated in FIG. 14B, the tire radial position of the end of the carcass folded-up portion may be the same as the tire radial position of the tire maximum width position P, may be inward from the tire maximum width position P in the tire radial direction as illustrated in the drawing, or may be outward from the tire maximum width position P in the tire radial direction.

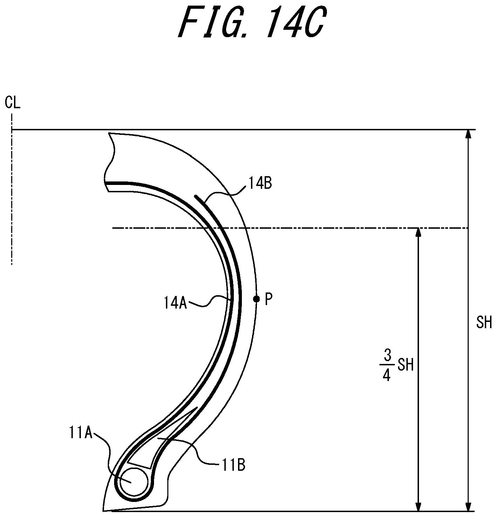

FIG. 14C is a schematic view illustrating another example of a carcass structure. As illustrated in FIG. 14C, it is also preferable that, in the foregoing reference state, the end of the carcass folded-up portion is located outward in the tire radial direction from a position away from the tire radial inner edge of the tire radial region corresponding to the tire section height SH outward in the tire radial direction by 3/4 of the tire section height SH. Since the carcass folded-up portion can protect a larger tire radial region from external damage than in the carcass structure illustrated in FIG. 14B, the resistance to external damage of the tire can be further improved.

In this case, the end of the carcass folded-up portion may be located inward in the tire width direction from the tire widthwise end of the maximum width belt layer having the maximum width in the tire width direction out of the one or more belt layers (envelope structure). This can particularly enhance the resistance to external damage of the tire.

The gauge of the sidewall rubber measured in a direction normal to the contour line of the tire outer surface from the tire outer surface at the tire maximum width position is preferably 0.5 mm to 5 mm, in a cross sectional view in the tire width direction in the foregoing reference state.

In the case of transmitting power from the power transmission coil to the power reception coil by the electromagnetic induction method, the foregoing gauge may be made relatively thin, e.g. 0.5 mm to 5 mm, in order to reduce the amount of the magnetic flux interfered by the sidewall rubber and reduce the weight of the tire. It was found out that a failure of a member such as the carcass body portion or the power reception coil caused by external damage noticeably occurs in such a case.

Accordingly, providing the carcass folded-up portion (as in each of the foregoing examples) is particularly effective in enhancing the resistance to external damage of the tire, in the case where the foregoing gauge is 5 mm or less.

The gauge is preferably 1.0 mm or more, from the viewpoint of allowing, for example, appropriate deflection of the sidewall portion of the tire.

Preferably, the tire 10 includes a pair of bead portions and a carcass composed of one or more carcass plies toroidally extending between the pair of bead portions, the cords of each carcass ply are made of organic fiber, and the cord count in the carcass ply is 10 to 50 per 50 mm. If the cord count in the carcass ply is more than 50 per 50 mm, the rate of strain propagation between cords is high, which can cause a failure. If the cord count in the carcass ply is less than 10 per 50 mm, the power reception efficiency decreases because rubber has lower magnetic permeability than organic fiber and tends to interfere with the magnetic flux from the power transmission coil 31. As a result of the cord count in the carcass ply being in the foregoing range, the durability of the tire can be improved while improving the power reception efficiency.

In some cases, the cord count in the carcass ply is preferably 15 to 45 per 50 mm. For example, in the case where the tire and wheel assembly is used for autonomous driving, running is possible even when the strength of the carcass as a tire framework is not very high, and improvement in power reception efficiency is particularly needed. As a result of the cord count in the carcass ply being 15 or more per 50 mm, high power reception efficiency can be achieved. As a result of the cord count in the carcass ply being 45 or less per 50 mm, sufficient running performance of the tire can be ensured while further improving the durability of the tire. The tire and wheel assembly used for autonomous driving may include, for example, an in-wheel motor.

Examples of organic fibers that can be used include aramid fiber, PET fiber, and nylon fiber.

Study was conducted and revealed that it is desirable to protect the tire members and the power reception coil from external damage especially in the case where the aspect ratio of the tire is 75 % or less.

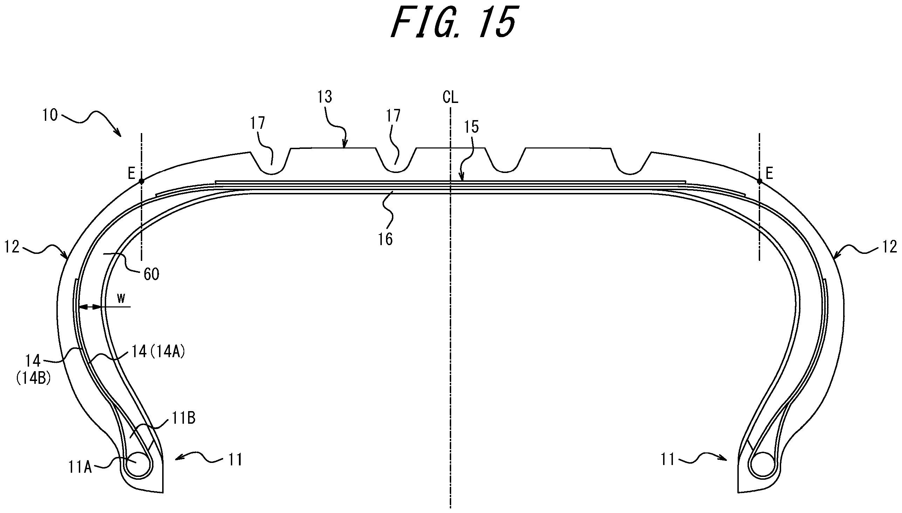

In view of this, as illustrated in FIG. 15, it is preferable that the aspect ratio of the tire 10 is 75 % or less, and a side reinforcement rubber 60 is provided in the sidewall portion 12 of the tire 10. In this example, the aspect ratio of the tire 10 is 75 % or less, and therefore the distance between the contact patch and the wheel 20 is short (as compared with a tire with a higher aspect ratio). Accordingly, when the tire deforms significantly such as when the tire drives over a curb or the like, the wheel 20 is likely to be subjected to a heavy load. In this embodiment, the side reinforcement rubber 60 is provided in the sidewall portion 12 of the tire 10. The side reinforcement rubber 60 reinforces the sidewall portion 12 of the tire, with it being possible to reduce the load on the wheel 20. In particular, in the case where the power reception coil 31 is located at the rim portion, damage to the power reception coil 31 can be prevented. The resistance to external damage can thus be improved.

The aspect ratio of the tire is preferably 70 % or less, more preferably 65 % or less, further preferably 60 % or less, and particularly preferably 55 % or less. Since the foregoing problem in that the wheel is likely to be subjected to a heavy load is more noticeable in such cases, it is particularly effective to provide the side reinforcement rubber in the sidewall portion of the tire 10 to reduce the load on the wheel as mentioned above.

Preferably, the tire includes a pair of bead portions and a carcass toroidally extending between the pair of bead portions, and a side reinforcement rubber is located between the carcass and the tire inner surface (inner liner in the illustrated example) in the tire width direction. In this way, the carcass can be further protected by the side reinforcement rubber, and the resistance to external damage of the tire can be improved.

The side reinforcement rubber preferably has a crescent cross-sectional shape, in a cross-sectional view in the tire width direction. Thus, when the tire punctures, the side reinforcement rubber can take over the load to enable running.

Study was conducted and revealed that run flat durability is required in technology using the electromagnetic induction method.

In view of this, as illustrated in FIG. 15, it is preferable that the sidewall portion 12 of the tire 10 includes the side reinforcement rubber 60, and the tire widthwise inner end of the side reinforcement rubber 60 is located inward in the tire width direction from the ground contact edge E in the foregoing reference state. Hence, the effect of the side reinforcement rubber 60 taking over the load to enable running when the tire punctures can be sufficiently achieved, and the run flat durability can be improved.

The tire widthwise inner end of the side reinforcement rubber is preferably located 3 mm or more inward in the tire width direction from the ground contact edge. This can further improve the run flat durability. For the same reason, the tire widthwise inner end of the side reinforcement rubber is more preferably located 5 mm or more inward in the tire width direction from the ground contact edge. The tire widthwise inner end of the side reinforcement rubber is preferably located 20 mm or less inward in the tire width direction from the ground contact edge, from the viewpoint of suppressing a decrease in power reception efficiency caused by the side reinforcement rubber interfering with the magnetic flux.

Preferably, the tire includes a pair of bead portions and a carcass toroidally extending between the pair of bead portions, and a side reinforcement rubber is located between the carcass and the tire inner surface in the tire width direction. In this way, the carcass can be further protected by the side reinforcement rubber, and the resistance to external damage of the tire can be improved.

The side reinforcement rubber preferably has a crescent cross-sectional shape, in a cross-sectional view in the tire width direction. Such a side reinforcement rubber is suitable for taking over the load to enable running when the tire punctures.

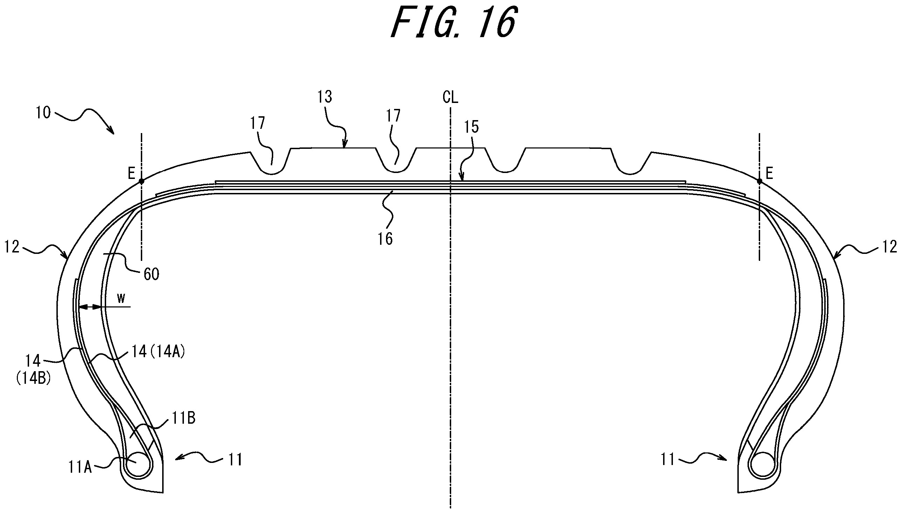

As illustrated in FIG. 16, it is preferable that the sidewall portion 12 of the tire 10 includes the side reinforcement rubber 60, and the tire widthwise inner end of the side reinforcement rubber 60 is located at the tire widthwise position of the ground contact edge E or located outward in the tire width direction from the ground contact edge E in the foregoing reference state. Hence, when transmitting power from the power transmission coil 41 to the power reception coil 31 via the contact patch, the side reinforcement rubber 60 can be prevented from interfering with the magnetic flux. A decrease in power reception efficiency can thus be suppressed.

The tire widthwise inner end of the side reinforcement rubber is preferably located 3 mm or more outward in the tire width direction from the ground contact edge. This can further suppress a decrease in power reception efficiency. For the same reason, the tire widthwise inner end of the side reinforcement rubber is more preferably located 5 mm or more outward in the tire width direction from the ground contact edge. The tire widthwise inner end of the side reinforcement rubber is preferably located 20 mm or less outward in the tire width direction from the ground contact edge, from the viewpoint of improving the run flat performance.

Preferably, the tire includes a pair of bead portions and a carcass toroidally extending between the pair of bead portions, and a side reinforcement rubber is located between the carcass and the tire inner surface in the tire width direction. In this way, the carcass can be further protected by the side reinforcement rubber, and the resistance to external damage of the tire can be improved.

The side reinforcement rubber preferably has a crescent cross-sectional shape, in a cross-sectional view in the tire width direction. Such a side reinforcement rubber is suitable for taking over the load to enable running when the tire punctures.

Study was conducted and revealed that there is a need to ensure power reception efficiency not only during normal running but also during run flat running in technology using the electromagnetic induction method.

In view of this, as illustrated in FIG. 15, it is preferable that the sidewall portion 12 of the tire 10 includes the side reinforcement rubber 60, and the width w of the side reinforcement rubber 60 in the tire width direction at the tire radial position of the tire maximum width position is 4 mm or more and 12 mm or less in the foregoing reference state. If the width w is less than 4 mm, there is a possibility that the side reinforcement rubber 60 cannot sufficiently take over and support the load during run flat running and the tire deflects, and as a result the power reception coil 31 becomes excessively close to the road surface (for example, from a state designed so as to maximize the power reception efficiency with respect to normal running) and the power reception efficiency decreases. If the width w is more than 12 mm, there is a possibility that the magnetic flux is interfered by the side reinforcement rubber during power feeding in normal running and the power reception efficiency decreases. If the width w is 4 mm or more and 12 mm or less, the power reception efficiency can be achieved both during normal running and during run flat running.

The width w of the side reinforcement rubber in the tire width direction at the tire radial position of the tire maximum width position is preferably 6 mm or more and 10 mm or less, in the foregoing reference state. As a result of the width w being 6 mm or more, the side reinforcement rubber can sufficiently take over and support the load during run flat running. Hence, variation (from normal running) in the distance between the power reception coil and the road surface can be reduced, and a decrease in power reception efficiency during run flat running can be further suppressed. As a result of the width w being 10 mm or less, the side reinforcement rubber can be further prevented from interfering with the magnetic flux during power feeding in normal running, and a decrease in power reception efficiency during normal running can be further suppressed. For the same reason, the width w is more preferably 7 mm or more and 9 mm or less.

Preferably, the tire includes a pair of bead portions and a carcass toroidally extending between the pair of bead portions, and a side reinforcement rubber is located between the carcass and the tire inner surface in the tire width direction. In this way, the carcass can be further protected by the side reinforcement rubber, and the resistance to external damage of the tire can be improved.

The side reinforcement rubber preferably has a crescent cross-sectional shape, in a cross-sectional view in the tire width direction. Such a side reinforcement rubber is suitable for taking over the load to enable running when the tire punctures.

Although the presently disclosed techniques have been described above by way of embodiments, the present invention is not limited to the foregoing embodiments. For example, the above describes the case where the vehicle 2 is an automobile, but the present invention is not limited to such. Examples of the vehicle 2 include not only automobiles such as passenger cars, trucks, buses, and two-wheeled vehicles, but also any vehicles that drive wheels and tires by power sources such as motors, including agricultural vehicles such as tractors, construction vehicles such as dump trucks, electric bicycles, and electric wheelchairs. The vehicle 2 may be an electrically driven vehicle, or a vehicle to which power used in the vehicle is fed.

The above describes the case where the tire is filled with air, but the present invention is not limited to such. For example, the tire may be filled with a gas such as nitrogen. For example, the tire may be filled with any fluid beside gas, such as a liquid, a gel-like substance, or a powder and granular material.

The above describes the case where the tire is a tubeless tire including an inner liner, but the present invention is not limited to such. For example, the tire may be a tube type tire including a tube.

For example, the tire may be a non-pneumatic tire. In this case, too, the power reception coil is located so as to be able to face the power transmission coil.

In the present invention, the tire preferably has a ground contact width of 120 mm or more.

REFERENCE SIGNS LIST

| | |
|---|---|
| 1 | wireless power reception system |
| 2 | vehicle |
| 2A | hub |
| 2B | drive shaft |
| 3 | tire and wheel assembly |
| 4 | in-wheel motor |
| 10 | tire |
| 11 | bead portion |
| 12 | sidewall portion |
| 13 | tread portion |
| 14 | carcass |
| 14A | carcass body portion |
| 14B | carcass folded-up portion |
| 15 | belt |
| 16 | inner liner |
| 17 | circumferential main groove |
| 19 | interlayer rubber |
| 20 | wheel, |
| 21 | rim portion |
| 22 | disc portion |
| 22A | attachment portion |
| 22B | spoke |
| 23 | flange |
| 24 | bead seat |
| 25 | well |
| 26 | hump |
| 27 | valve |
| 28 | wheel cover |
| 30 | power reception device |
| 31 | power reception coil |
| 32 | power conversion circuit |
| 33 | power storage |
| 34 | controller |
| 40 | power transmission device |
| 41 | power transmission coil |
| 60 | side reinforcement rubber |

**Claims**

1. A tire and wheel assembly (3) comprising:

a tire (10) including a tread portion (13) and a reinforcement member composed of one or more reinforcement layers that are each a cord layer coated with rubber;
a wheel (20) including a rim portion (21) on which the tire (10) is mounted; and
a power reception coil (31),
wherein one or more circumferential main grooves (17) extend in a tire circumferential direction on a tread surface of the tread portion (13),
at least one circumferential main groove (17) out of the one or more circumferential main grooves (17) satisfies a ratio OTD/SBG is 1.05 or more
wherein SBG is 0.5 mm or more and 4.5 mm or less,

in a reference state in which the tire and wheel assembly (3) is filled to a prescribed internal pressure and placed under no load, where OTD is a groove depth of the circumferential main groove (17), and SBG is a gauge from a groove bottom of the circumferential main groove (17) to an outermost reinforcement member in a tire radial direction, and

in the reference state, a cord end of at least one reinforcement layer is located inward from a shoulder region in the tire width direction, the shoulder region being a region outward in the tire width direction from a position away from each of both tire widthwise ends of a maximum width reinforcement layer having the maximum width in the tire width direction out of the one or more reinforcement layers and inward in the tire width direction by 5 % of the width of the maximum width reinforcement layer in the tire width direction.

2. The tire and wheel assembly (3) according to claim 1, wherein the at least one circumferential main groove (17) is located in a region where a surface of the power reception coil (31) is projected in a direction orthogonal to the surface.

3. The tire and wheel assembly (3) according to any one of claims 1 to 2, wherein OTD is 2 mm or more and 10 mm or less.

**Patentansprüche**

1. Reifen-Rad-Baugruppe (3), die Folgendes umfasst:

   einen Reifen (10), der einen Laufflächenabschnitt (13) und ein Verstärkungselement, das aus einer oder mehreren Verstärkungslagen besteht, die jeweils eine mit Gummi überzogene Kordlage sind, einschließt;
   ein Rad (20), das einen Felgenabschnitt (21) einschließt, auf dem der Reifen (10) montiert ist; und
   eine Energieaufnahmespule (31),
   wobei sich eine oder mehrere umlaufende Hauptrillen (17) in einer Reifenumfangsrichtung auf einer Lauffläche des Laufflächenabschnitts (13) erstrecken,
   mindestens eine umlaufende Hauptrille (17) von der einen oder den mehreren umlaufenden Hauptrillen (17) Folgendes erfüllt:

   ein Verhältnis OTD/SBG beträgt 1,05 oder mehr,
   wobei SBG 0,5 mm oder mehr und 4,5 mm oder weniger beträgt,
   in einem Referenzzustand, in dem die Reifen-Rad-Baugruppe (3) bis zu einem vorgeschriebenen Innendruck gefüllt und unter keine Last gesetzt ist, wo OTD eine Rillentiefe der umlaufenden Hauptrille (17) ist, und SBG ein Abstand von einer Rillensohle der umlaufenden Hauptrille (17) bis zu einem äußersten Verstärkungselement in einer Reifenradialrichtung ist, und
   in dem Referenzzustand sich ein Kordende mindestens einer Verstärkungslage von einem Schulterbereich in der Reifenbreitenrichtung nach innen befindet, wobei der Schulterbereich ein Bereich, in der Reifenbreitenrichtung nach außen von einer Position, weg von jedem der beiden Reifenbreitenrichtungsenden einer Verstärkungslage maximaler Breite, welche von der einen oder den mehreren Verstärkungslagen die maximale Breite in der Reifenbreitenrichtung aufweist, und in der Reifenbreitenrichtung nach innen um 5 % der Breite der Verstärkungslage maximaler Breite in der Reifenbreitenrichtung, ist.

2. Reifen-Rad-Baugruppe (3) nach Anspruch 1, wobei sich die mindestens eine umlaufende Hauptrille (17) in einem Bereich befindet, wo eine Oberfläche der Energieaufnahmespule (31) in einer Richtung senkrecht zu der Oberfläche vorspringt.

3. Reifen-Rad-Baugruppe (3) nach einem der Ansprüche 1 bis 2, wobei OTD 2 mm oder mehr und 10 mm oder weniger beträgt.

**Revendications**

1. Ensemble pneumatique et roue (3), comprenant :

   un pneumatique (10) incluant une partie de bande de roulement (13) et un élément de renforcement composé d'une ou de plusieurs couches de renforcement qui sont chacune une couche de câblés recouverte de caoutchouc ;
   une roue (20) incluant une partie de jante (21) sur laquelle le pneumatique (10) est monté ; et

une bobine de réception d'énergie (31),

dans lequel une ou plusieurs rainures circonférentielles principales (17) s'étendent dans une direction circonférentielle du pneumatique, sur une surface de bande de roulement de la partie de bande de roulement (13),

au moins une rainure circonférentielle principale (17) parmi lesdites une ou plusieurs rainures circonférentielles principales (17) satisfait la condition suivante :

un rapport OTD/SBG est de 1,05 ou plus,

dans lequel SBG est de 0,5 mm ou plus et de 4,5 mm ou moins,

dans un état de référence, dans lequel l'ensemble pneumatique et roue (3) est gonflé à une pression interne prescrite et n'est placé sous aucune charge, où OTD représente une profondeur de rainure de la rainure circonférentielle principale (17), et SGB représente une distance depuis un fond de rainure de la rainure circonférentielle principale (17) jusqu'à un élément de renforcement externe extrême, dans une direction radiale du pneumatique, et

dans l'état de référence, une extrémité de câblé d'au moins une couche de renforcement est située vers l'intérieur d'une région d'épaulement dans la direction de la largeur du pneumatique, la région d'épaulement étant une région située vers l'extérieur, dans la direction de la largeur du pneumatique, d'une position à l'écart de chacune des deux extrémités, dans le sens de la largeur du pneumatique, d'une couche de renforcement à largeur maximale ayant la largeur maximale dans la direction de la largeur du pneumatique parmi les une ou plusieurs couches de renforcement, et vers l'intérieur, dans la direction de la largeur du pneumatique, de 5 % de la largeur de la couche de renforcement à largeur maximale, dans la direction de la largeur du pneumatique.

2. Ensemble pneumatique et roue (3) selon la revendication 1, dans lequel l'au moins une rainure circonférentielle principale (17) est située dans une région où une surface de la bobine de réception d'énergie (31) est projetée dans une direction orthogonale à la surface.

3. Ensemble pneumatique et roue (3) selon l'une quelconque des revendications 1 à 2, dans lequel OTD est de 2 mm ou plus et de 10 mm ou moins.

# FIG. 1

# FIG. 2

EP 4 079 531 B1

# FIG. 3

# FIG. 4

FIG. 5

*FIG. 6*

15a

# FIG. 7

# FIG. 8

## *FIG. 9A*

## *FIG. 9B*

# FIG. 10

# FIG. 11

FIG. 12

# FIG. 13

## FIG. 14A

## FIG. 14B

# FIG. 14C

# FIG. 15

FIG. 16

*FIG. 17*

VEHICLE-INSTALLED INSIDE

VEHICLE-INSTALLED OUTSIDE

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018068077 A
- EP 4043233 A1
- DE 102013109355 A1
- JP 2019047691 A